# EUROPÄISCHE PATENTSCHRIFT

(11) **EP 2 956 569 B1**
(45) Veröffentlichungstag und Bekanntmachung des Hinweises auf die Patenterteilung: **12.04.2017**
(21) Anmeldenummer: 14703815.2
(22) Anmeldetag: 07.02.2014
(51) Int. Cl.: C23C 22/78, C23C 22/80, C23C 22/36, C23G 1/20

(54) **VERFAHREN ZUR BESCHICHTUNG VON METALLISCHEN OBERFLÄCHEN ZUR VERMEIDUNG VON STIPPEN AUF ZINK-HALTIGEN METALLISCHEN OBERFLÄCHEN**
METHOD FOR COATING METALLIC SURFACES FOR PREVENTING PINHOLES ON ZINC-CONTAINING METAL SURFACES
PROCÉDÉ PERMETTANT LE REVÊTEMENT DE SURFACES MÉTALLIQUES POUR ÉVITER LA FORMATION DE PIQÛRES SUR DES SURFACES MÉTALLIQUES CONTENANT DU ZINC

(30) Priorität: 13.02.2013 DE 102013202286
(43) Veröffentlichungstag der Anmeldung: 23.12.2015
(73) Patentinhaber: Chemetall GmbH, 60487 Frankfurt am Main (DE)
(72) Erfinder: MROCHEM, Martin, 60435 Frankfurt am Main (DE); SPECHT, Jürgen, 63110 Rodgau (DE); WIETZORECK, Hardy, 65934 Frankfurt am Main (DE); DAHLENBURG, Olaf, 63263 Neu-Isenburg (DE)
(74) Vertreter: Rottmayer, Hans
(86) Internationale Anmeldenummer: PCT/EP2014/052383
(87) Internationale Veröffentlichungsnummer: WO 2014/124866

(56) Entgegenhaltungen:
- EP-A1- 0 264 151
- EP-A1- 1 930 475
- EP-A2- 0 224 190
- DE-A1-102008 054 407
- WYVILLE ROBERT D ET AL: "RESOLVING WHITE SPOTTING PROBLEMS (NUBBING) ON ELECTROGALVANISED METAL DURING METAL PRETREATMENT", SAE SPECIAL PUBLICATIONS, SAE INC, US, 1. Januar 1986 (1986-01-01), Seiten 85-95, XP009177896, ISSN: 0099-5908

## Beschreibung

Die vorliegende Anmeldung betrifft Verfahren zur Beschichtung von metallischen Oberflächen zur Vermeidung von Stippen auf Zink-haltigen metallischen Oberflächen unter Verwendung eines Silan-Zusatzes in einer wässerigen Reinigungszusammensetzung, in einer wässerigen Spülflüssigkeit oder/und in einer wässerigen Aktivierungszusammensetzung.

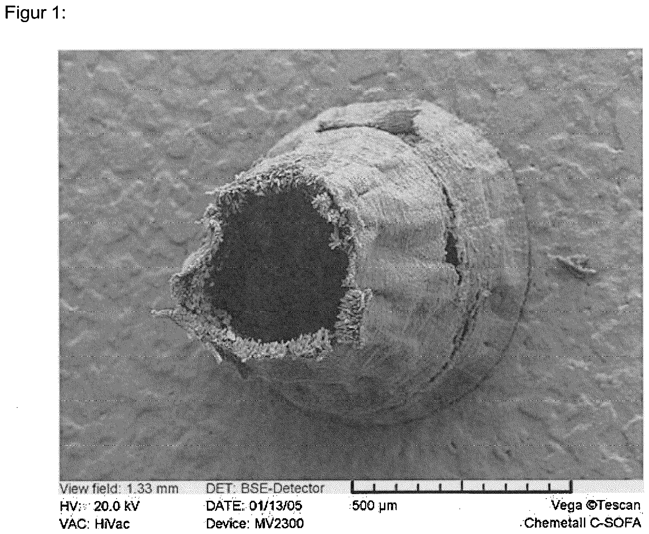

Als "Stippen" oder "weiße Flecken" (white spots) werden auf Oberflächen von Zink und Zinklegierungen kleine Fehlstellen genannt, die z.B. durch eine lokal erhöhte Beizrate auf der zinkreichen metallischen Oberfläche hervorgerufen werden können oder mit einer Phosphatierungslösung, die zu hohe Gehalte an Chloridionen oder/ und Nitrationen aufweist. Sie können insbesondere bei längeren Behandlungszeiten auftreten. Stippen sind weiße oder helle Korrosionspunkte auf der Metalloberfläche, die unter dem Mikroskop ähnlich wie ein Krater aussehen. In krassen Situationen können die kraterförmigen Stippen sogar etwa 1 mm hoch aus der metallischen Oberfläche herausragen, wobei die Zink-haltige Beschichtung z.B. einer Feuerverzinkung im Inneren der kraterförmigen Stippe mehr oder weniger aufgelöst ist. In einem Reinigungsbad gebildete Stippen können eher flach sein und gegebenenfalls mehrere Millimeter Durchmesser aufweisen. Figur 1 zeigt eine besonders große Stippe im rasterelektronenmikroskopischen Bild auf einer verzinkten und danach zinkphosphatierten metallischen Oberfläche, die etwa 1 mm hoch aus der beschichteten Oberfläche herausragt und in deren Inneren die Verzinkung weitgehend aufgelöst ist. Stippen können Ausgangspunkt für eine stärkere Schädigung durch Korrosion sein, da die schützende Zink- oder Zinklegierungsschicht im Bereich der Stippe erheblich geschädigt ist, und können Ausgangspunkt für eine stärkere Schädigung durch Enthaftung der auflagernden Beschichtung sein. Daher stört bereits eine einzige Stippe, und deswegen sind Stippen in der industriellen Praxis gänzlich zu vermeiden.

Dennoch besteht seit Jahrzehnten und trotz vermehrter Erfahrung in der Vermeidung von Stippen weiterhin das Problem der Bildung von Stippen aufgrund von Verunreinigungen im Bad und aufgrund der Verwendung von metallischen Substraten mit erhöhten Anteilen an Verunreinigungen. Sie können als helle kraterförmige Fehlstellen in einer kristallinen Phosphatschicht auftreten und sich auch nach dem Lackieren mit einer oder sogar mit mehreren Lackschichten auf der Lackoberfläche als Erhebung oder als Markierung abzeichnen. Daher führt die Anwesenheit von Stippen schnell zum Nacharbeiten z.B. der phosphatierten und gegebenenfalls auch mit Elektrotauchlack oder Pulverlack, mit anderem Lack oder/und mit Klarlack beschichteten metallischen Oberflächen. Das Nacharbeiten erfolgt insbesondere dadurch, dass diese Teile im Bereich um die schadhafte Stelle z.B. durch Schleifen oder Sandstrahlen geebnet und evtl. bis zur metallischen Oberfläche abgearbeitet werden und danach erneut z.B. durch Nachbehandeln wie z.B. durch Phosphatieren und mit ein oder mehreren Lackschichten ausgeglichen werden. Aufgrund der Tatsache, dass derartige Reparaturarbeiten oft in einer Linie der Karosseriebeschichtung im Automobilbau auftreten und meistens von Hand ausgeführt werden, ist der zeitliche und manuelle Aufwand sehr hoch.

Stippen werden oft erst am Ende einer Behandlungslinie nach dem Konversionsbeschichten oder sogar erst nach der weiteren Beschichtung mit einem Elektrotauchlack, Pulverlack oder Primer erkannt oder mit den Händen als Unebenheiten ertastet. Nur unter bestimmten Bedingungen können größere Stippen auf gereinigten metallischen Oberflächen, auf gespülten metallischen Oberflächen, auf aktivierten metallischen Oberflächen oder auf konversionsbeschichteten wie z.B. phosphatierten metallischen Oberflächen erkannt werden, wenn die behandelten Substrate aus dem Bad genommen werden.

Eine typische Behandlungslinie beim Phosphatieren kann beispielsweise mindestens eine Reinigungszone mit einer wässerigen Reinigungszusammensetzung, mindestens eine Spülzone mit einer wässerigen Spülflüssigkeit und gegebenenfalls mindestens eine Zone für die Aktivierung vor der Phosphatierung mit einer wässerigen Aktivierungszusammensetzung A) oder B) und danach Zonen für eine Phosphatierung und für mindestens eine erneute Spülung mit einer wässerigen Spülflüssigkeit umfassen., gegebenenfalls vor mindestens einer Zone für mindestens eine Lackierung.

Eine andere typische Behandlungslinie kann beispielsweise mindestens eine Reinigungszone mit einer wässerigen Reinigungszusammensetzung, mindestens eine Spülzone mit einer wässerigen Spülflüssigkeit und mindestens eine Zone für die Behandlung oder Vorbehandlung mit einer Silan-haltigen wässerigen Zusammensetzung zur Konversionsbeschichtung und gegebenenfalls danach mindestens eine Spülzone mit einer wässerigen Spülflüssigkeit und gegebenenfalls auch Zonen für mindestens eine Lackierung umfassen.

Allgemein kann eine typische Behandlungslinie beispielsweise mindestens eine Reinigungszone mit einer wässerigen Reinigungszusammensetzung, mindestens eine Spülzone mit einer wässerigen Spülflüssigkeit und mindestens eine Zone für die Behandlung oder Vorbehandlung mit einer wässerigen Zusammensetzung zur Konversionsbeschichtung und gegebenenfalls danach mindestens eine Spülzone mit einer wässerigen Spülflüssigkeit und gegebenenfalls auch mindestens eine Zone für mindestens eine Lackierung umfassen. Eine Zone ist in der Praxis mit einer Stufe gleichzusetzen.

Die Vorschläge zur Vermeidung von Stippen im Stand der Technik beziehen sich jedoch auf die Phosphatierungsbedingungen und auf die Zusammensetzung der Zinkphosphatierungslösung. In der industriellen Praxis wurde darüber hinaus gegebenenfalls ein Nitrit einer wässerigen Reinigungszusammensetzung, einer wässerigen Spülflüssigkeit oder/und einer wässerigen Aktivierungszusammensetzung zugesetzt, um eine Stippenbildung zu vermindern oder zu vermeiden. Nitrite sind jedoch giftige Zusatzstoffe und können sich gegebenenfalls schnell zersetzen, so dass sie dann schnell ergänzt werden müssen.

R. D. Wyville, T. W. Cape: Resolving White Spotting Problems (NUBBING) on Electrogalvanised Metal during Metal Pretreatment. SAE Technical Paper Series 860117, Int. Congr. and Expos. Detroit, Michigan, Febr. 24-28, 1986, pp. 85-95, 1. Januar 1986, XP009177896, ISSN: 0099-5908, beschreibt das Auftreten von weißen Flecken auf galvanisch verzinkten metallischen Oberflächen und ihre Vermeidung. DE 29 51 600 A1 betrifft Verfahren zum Reinigen, Entfetten und Aktivieren von Metalloberflächen vor dem schichtbildenden Phosphatieren, bei dem die Oberflächen mit Lösungen von pH 6,3 bis 8,2 behandelt werden, die höchstens einen Gehalt von kondensierten Phosphaten zur Kompensation der Wasserhärte enthalten.
EP 0 224 190 A2 beschreibt Verfahren zur Aktivierung von Metalloberflächen zwischen den Schritten der Reinigung/Spülung und Zinkphosphatierung unter Verwendung wässeriger, alkalischer, Titanionen und Phosphationen enthaltender Lösungen, bei denen man die Aktivierungslösungen auf einen pH-Wert von 8 bis 10 einstellt und ihnen zusätzlich Dinatriumtetraborat und/oder andere lösliche Alkali- oder Erdalkalimetallborate zusetzt.
EP 0 264 151 A1 offenbart Verfahren zur Erzeugung von Phosphatüberzügen auf Verbundteilen aus Stahl und verzinktem Stahl durch alkalisches Reinigen, Spülen mit wässerigem Spülbad und Zinkphosphatieren, bei dem die gereinigten Verbundteile mit einem Spülbad gespült werden, das mindestens 0,2 g/L Alkaliborat, mindestens 0,1 g/L Alkalisilikat und mindestens 0,05 g/L Alkalinitrit enthält.

DE 102008054407 A1 lehrt Verfahren zum Phosphatieren von metallischen Oberflächen, bei denen die metallischen Oberflächen vor dem Phosphatieren mit einem wässerigen kolloidalen Aktivierungsmittel auf Basis von Phosphat und Titan behandelt werden und bei denen das Aktivierungsmittel mindestens eine wasserlösliche Siliciumverbindung mit mindestens einer organischen Gruppe enthält.

Es wurde jedoch beobachtet, dass Stippen auf metallischen Oberflächen von Zink und Zinklegierungen oft bereits vor dem Phosphatieren gebildet werden und auch oft bei andersartigen Konversionsbeschichtungen als einem Zinkphosphatieren auftreten können.

Denn Stippen können bereits in einer wässerigen Reinigungszusammensetzung, in einer wässerigen Spülflüssigkeit oder/und in einer wässerigen Aktivierungszusammensetzung vor einem Phosphatieren oder vor einer anderen Art des Konversionsbeschichtens gebildet werden. In diesen Situationen helfen die im Stand der Technik genannten Maßnahmen zum Zinkphosphatieren nicht oder nur begrenzt.

Wenn metallische Oberflächen beschichtet werden sollen und nicht kurz davor frisch feuerverzinkt wurden, ist es üblich, die metallischen Oberflächen erst in einer wässerigen Reinigungszusammensetzung zu reinigen, insbesondere zu entfetten. Hierzu kann insbesondere eine saure, neutrale, alkalische oder stark alkalische Reinigungszusammensetzung, aber gegebenenfalls auch zusätzlich eine saure Beizzusammensetzung verwendet werden. Die wässerige Reinigungszusammensetzung kann neben mindestens einem Tensid gegebenenfalls auch ein Reinigergerüst oder/und andere Zusätze wie z.B. Komplexbildner enthalten.

Zwischen dem Reinigen und dem Aktivieren findet üblicherweise mindestens ein Spülen mit Wasser statt, wobei dem Wasser gegebenenfalls auch ein in Wasser gelöster Zusatzstoff wie z.B. ein Nitrit zugesetzt sein kann.

Eine Aktivierungszusammensetzung wird üblicherweise nur vor einem Manganphosphatieren oder vor einem Zinkphosphatieren eingesetzt, bei denen Mangan oder Zink das hauptsächlich enthaltene Kation darstellt und bei denen gegebenenfalls weitere Kationen untergeordnet enthalten sein können. Die Aktivierungszusammensetzung dient dazu, eine Vielzahl von feinsten Phosphatpartikeln als Impfkristalle auf der metallischen Oberfläche abzusetzen. Diese helfen im nachfolgenden Prozeßschritt, im Kontakt mit der Phosphatierungslösung eine insbesondere kristalline Phosphatschicht mit einer möglichst hohen Zahl dicht angeordneter feiner Phosphatkristalle oder eine weitgehend geschlossene Phosphatschicht auszubilden. Besonders bevorzugt ist die Verwendung eines Silan-Zusatzes in mindestens einer wässerigen erfindungsgemäßen Zusammensetzung eines Bades oder einer Zone vor einem Alkaliphosphatieren, vor einem Manganphosphatieren oder vor einem Zinkphosphatieren

Eine Phosphatierungslösung zum Phosphatieren, das auf ein Aktivieren folgen kann, kann neben den Kationen und neben einem Gehalt an Orthophosphat insbesondere einen Gehalt an kondensiertem Phosphat, Nitrat, Fluorid, Komplexfluorid, organischem Polymer oder/und Beschleuniger wie z.B. Beschleuniger auf Basis von Nitrit, Chlorat, Peroxid oder/und Nitroverbindung wie z.B. Nitroguanidin enthalten.

Die bislang am häufigsten eingesetzten Verfahren zur Behandlung (=Passivierung) von metallischen Oberflächen, insbesondere von Teilen, Band (Coil) oder/und Bandabschnitten aus mindestens einem metallischen Werkstoff bzw. zur Vorbehandlung von metallischen Oberflächen vor einer weiteren Beschichtung wie z.B. einer Lackierung von metallischen Oberflächen basieren vielfach auf dem Einsatz von wässerigen Phosphatierungslösungen wie z.B. ZinkManganNickel-Phosphatierungslösungen und seit mehreren Jahren auch vermehrt auf dem Einsatz von Silan-haltigen Lösungen. Diese wässerigen oder/und alkoholischen Silan-haltigen Lösungen enthalten neben jeweils mindestens einem Silan, Silanol oder/und Siloxan gegebenenfalls auch einen Zusatz an organischem Polymer/Copolymer, Kationen, Fluorid, Komplexfluorid, Silicat oder/und an weiteren Zusätzen wie z.B. einem Beschleuniger. Häufig wird ein Mix an verschiedenen metallischen Werkstoffen wie z.B. auf Basis von Stahl, verzinktem Stahl, legierungsverzinktem Stahl oder/und Aluminiumlegierung in einem solchen Bad behandelt oder vorbehandelt. Daher werden häufig hohe Anforderungen an Multimetallanwendungen gelegt, die aufgrund der chemisch variierenden Bedingungen nicht ohne weiteres für alle Werkstoffvarianten der metallischen Oberflächen gleich gut genutzt werden können.

An die Behandlung oder Vorbehandlung mit einer Konversionszusammensetzung kann sich insbesondere nach einem Spülen mit Wasser bei Bedarf eine Behandlung mit einer Nachspüllösung anschließen, dem gegebenenfalls ein Spülen mit Wasser folgen kann. Häufig wird als erste Lackschicht nach einer Vorbehandlung eine Elektrotauchlackierung mit einem Elektrotauchlack wie z.B. einem kathodischen Elektrotauchlack (KTL, e-coat), ein Primer oder ein Pulverlack eingesetzt.

Es bestand daher die Aufgabe, ein Verfahren vorzuschlagen, mit dem die Bildung von Stippen in einer wässerigen Reinigungszusammensetzung, in einer wässerigen Spülflüssigkeit oder/und in einer wässerigen Aktivierungszusammensetzung unterdrückt oder vermieden werden kann. Es wäre hierbei von Vorteil, wenn mit diesem Verfahren auch Markierungen, die sich auch später im Lack ausprägen könnten, vermieden werden könnten. Es wäre außerdem hierbei von Vorteil, wenn dieses Verfahren auf einfache Weise umgesetzt werden könnte. Es wäre außerdem vorteilhaft, wenn das erfindungsgemäße Verfahren auch für Multimetallanwendungen, bei denen z.B. Stahl und Zink-reiche metallische Oberflächen und gegebenenfalls auch Aluminium-reiche metallische Oberflächen im gleichen Bad behandelt oder vorbehandelt werden, geeignet wäre.

Es wurde jetzt überraschend gefunden, dass es mit einem Silan-Zusatz möglich ist, die Bildung von Stippen zu unterdrücken oder zu vermeiden, wenn a) der wässerigen Reinigungszusammensetzung, b) der wässerigen Spülflüssigkeit oder/und c) der wässerigen Aktivierungszusamrriensetzung vor einem Phosphatieren ein Gehalt an Silan zugesetzt wird. Außerdem zeigte sich jetzt, dass außerdem Fehler wie streifenförmige Markierungen und staubige Beläge auf konversionsbeschichteten metallischen Oberflächen, die sich oft erst durch die Konversionsbeschichtung ausprägen, mit einem Silan-Zusatz vermindert oder sogar vermieden werden können.

Die Aufgabe wird gelöst durch Verwendung eines Silan-Zusatzes zur Vermeidung von Stippen auf Zink-haltigen metallischen Oberflächen 1.) in einer wässerigen Reinigungszusammensetzung, 2.) in einer wässerigen Spülflüssigkeit, die a) vor einem Reinigen, die b) inmitten mehrerer Reinigungszonen, die c) unmittelbar nach einem Reinigen oder/und die d) als Flüssigkeit zum Abkühlen verwendet wird, oder/und 3.) in einer wässerigen Aktivierungszusammensetzung, wobei der Gehalt an jeweils mindestens einem Silan, Silanol oder/und Siloxan in mindestens einer dieser wässerigen Zusammensetzungen im Bereich von 0,001 bis 5 g/L liegt berechnet auf das jeweilige Silan. Das Silan wird hierbei als die Ausgangsverbindung der Reaktionskette z.B. von Silan über Silanol bis Siloxan angesehen.

Sie betrifft daher auch die Verwendung eines Silan-Zusatzes zur Vermeidung von Stippen auf Zink-haltigen metallischen Oberflächen 1.) in einem wässerigen Reinigungsbad, 2.) in einem wässerigen Spülbad, dessen Flüssigkeit a) vor einem Reinigen, b) inmitten mehrerer Reinigungszonen, c) unmittelbar nach einem Reinigen oder/und d) zum Abkühlen verwendet wird, oder/und 3.) in einem wässerigen Aktivierungsbad, wobei der Gehalt an jeweils mindestens einem Silan, Silanol oder/und Siloxan in mindestens einem dieser wässerigen Bäder im Bereich von 0,001 bis 5 g/L liegt berechnet auf das jeweilige Silan. Bei den Varianten 2.) c) und d) können auch jeweils mehrere Spülzonen nach dem Reinigen bzw. zum Abkühlen verwendet werden. Der Begriff "Abkühlen" umfasst dabei gegebenenfalls auch ein Abschrecken.

Bei Verwendung eines Silan-Zusatzes zur Vermeidung von Stippen auf Zink-haltigen metallischen Oberflächen 1.) in der wässerigen Reinigungszusammensetzung einer Reinigungszone, 2.) in der wässerigen Spülflüssigkeit einer Spülzone, dessen Flüssigkeit a) vor einem Reinigen, b) inmitten mehrerer Reinigungszonen, c) unmittelbar nach einem Reinigen oder/und d) zum Abkühlen verwendet wird, oder/und 3.) in der wässerigen Aktivierungszusammensetzung einer Aktivierungszone einer Behandlungslinie liegt der Gehalt an jeweils mindestens einem Silan, Silanol oder/und Siloxan in mindestens einer dieser Zonen vorzugsweise im Bereich von 0,001 bis 5 g/L berechnet auf das jeweilige Silan. Eine Reinigung kann beispielsweise ein bis drei Zonen und gegebenenfalls dazwischen auch eine Spülzone umfassen. Eine Spülung kann beispielsweise in ein bis vier Zonen z.B. nach einem Reinigen erfolgen. Auch ein Spritzring wird als eine Zone verstanden. Eine Aktivierung findet üblicherweise nur in einer Zone statt.

Der Begriff "Silan" oder "Silan-Zusatz" umfasst Silan, Silanol oder/ und Siloxan - wie im Folgenden näher erläutert wird.

Der Begriff "Bad" im Sinne dieser Anmeldung ist daher gleichbedeutend mit "Zusammensetzung" und gegebenenfalls auch mit "Zone", denn diese Zusammensetzung kann sowohl im Bad eines singulär einzusetzenden Schrittes, als auch im Bad einer Zone einer Behandlungslinie eingesetzt werden. Das Bad im Sinne dieser Anmeldung kann als Bad in einem Behälter oder/und als Bad z.B. durch Sprühen singulär z.B. im Labor oder in einer Zone einer Behandlungslinie eingesetzt werden.

Der Begriff "Spülen" oder "Spülung" im Sinne dieser Anmeldung umfasst auch ein Kontaktieren mit Wasser z.B. durch Tauchen in ein Bad, das sich in einem Behälter befindet.

Eine Behandlungslinie kann insbesondere Bäder mit wässerigen Zusammensetzungen zum Reinigen mit einer Reinigungszusammensetzung, zum Spülen mit einer wässerigen Spülflüssigkeit, zum Aktivieren mit einer wässerigen Aktivierungszusammensetzung, zur Passivierung oder zur Vorbehandlung mit einer Konversionszusammensetzung zur Passivierung oder zur Vorbehandlung wie z.B. mit einer Phosphatierungslösung oder wie z.B. im Wesentlichen auf Basis von Metallkationen, Phosphat, Fluor-Verbindung, Silan, Silicat, Komplexbildner oder/und organischem Polymer/Copolymer. Als Passivierung oder Behandlung im engen Sinn wird eine Behandlung ohne eine weitere, in absehbarer Zeit erfolgende Beschichtung z.B. mit mindestens einer organischen Zusammensetzung eines Klebstoffs, Primers oder/und Lackes angesehen. Als Vorbehandlung wird eine Behandlung im weiten Sinn vor mindestens einer weiteren Beschichtung z.B. mit einer organischen Zusammensetzung eines Klebstoffs, Primers oder/und Lackes angesehen.

Besonders bevorzugt ist die Verwendung eines Silan-Zusatzes in mindestens einer wässerigen Zusammensetzung eines Bades oder einer Zone insbesondere zum Reinigen, Spülen oder/und Aktivieren A) vor einem Phosphatieren oder zum Reinigen oder/und Spülen B) vor einem Passivieren oder Vorbehandeln mit einer wässerigen Konversionszusammensetzung mit einem Gehalt an Fluorid oder/und an Titan-, Hafnium- oder/und Zirkoniumkomplexfluorid, an Silan, an Metallkationen wie Mangan, an organischem Polymer/Copolymer oder/und an mindestens einem Additiv oder C) vor einer alkalischen, neutralen oder sauren wässerigen Passivierung mit einem Gehalt an Metallkationen, Komplexfluorid, Oxid, Phosphat, Silan, Silicat, organischem Polymer/Copolymer oder/und mindestens einem Additiv. Die entsprechenden Konversionszusammensetzungen sind grundsätzlich bekannt.

Das erfindungsgemäße Reinigen mit einer wässerigen Silan-haltigen Reinigungsflüssigkeit kann insbesondere mit einer wässerigen neutralen, alkalischen oder stark alkalischen Reinigungszusammensetzung mit einem Gehalt an mindestens einem Tensid und gegebenenfalls auch mit einem Gehalt an Reinigergerüst oder/und anderen Zusätze wie z.B. Komplexbildner erfolgen.

Das erfindungsgemäße Spülen mit einer wässerigen Silan-haltigen Spülflüssigkeit betrifft insbesondere das Spülen a) vor einer Reinigung, b) inmitten einer Reinigung, c) nach einer Reinigung mit mindestens einer wässerigen Reinigungszusammensetzung oder/und d) zum Abkühlen mit jeweils mindestens einer wässerigen Spülflüssigkeit sowie gegebenenfalls auch das Spülen e) unmittelbar vor oder/und f) unmittelbar nach einem Aktivieren mit einer wässerigen Aktivierungszusammensetzung oder/und das Spülen g) vor einem Konversionsbeschichten, das heißt vor einem Passivieren oder vor einem Vorbehandeln mit einer wässerigen Konversionszusammensetzung. Hierbei können einzelne dieser Spülschritte a) bis g) gegebenenfalls zusammenfallen. Das Behandeln = Passivieren und das Vorbehandeln werden unter Konversionsbeschichten zusammengefasst. Die Behandlungszusammensetzung = Passivierungszusammensetzung und die Vorbehandlungszusammensetzung werden unter Konversionszusammensetzungen zusammengefasst und entsprechend werden auch die Bäder, Zonen und ähnliche Begriffe in analoger Weise zusammengefasst. Der Begriff "Bad" ist im Sinne der vorliegenden Anmeldung als wässerige Zusammensetzung bzw. wässerige Flüssigkeit anzusehen.

Das erfindungsgemäße Aktivieren mit einer wässerigen Silan-haltigen Aktivierungszusammensetzung betrifft insbesondere ein Aktivieren mit einer wässerigen Aktivierungszusammensetzung als sogenannter Surface Conditioner mit einem pH-Wert im Bereich von 3 bis 12 auf Basis von wasserunlöslichen Partikeln von Orthophosphaten von zwei- oder/ und dreiwertigen Metallen mit einer mittleren Partikelkorngröße von bis zu 3 µm oder ein Aktivieren mit einer wässerigen Aktivierungszusammensetzung auf Basis von kolloidalem Titanphosphat, mindestens einem in Wasser gelösten oder in Wasser löslichen Orthophosphat und gegebenenfalls mindestens einem kondensierten Phosphat.

Auch die erfindungsgemäße wässerige Reinigungszusammensetzung kann gegebenenfalls auch mit einem anderen Prozeßschritt wie z.B. einem Aktivieren, Alkaliphosphatieren oder Passivieren kombiniert werden und enthält dann mindestens eine entsprechende weitere Substanz jenes Prozeßschritts, wodurch ein verkürzter und vereinfachter Verfahrensgang erzielt werden kann. Auch derartige Zusammensetzungen werden im Sinne dieser Anmeldung als wässerige Reinigungszusammensetzungen bezeichnet.

Der Gehalt der erfindungsgemäßen wässerigen Reinigungszusammensetzung (= Reinigungsbad), der erfindungsgemäßen wässerigen Spülflüssigkeit (= Spülbad) oder/und der wässerigen Aktivierungszusammensetzung (= Aktivierungsbad) an jeweils mindestens einem Silan, Silanol oder/und Siloxan beträgt 0,001 bis 5 g/L, berechnet auf das jeweilige Silan. Vorzugsweise beträgt der Gehalt an jeweils mindestens einem Silan, Silanol oder/und Siloxan in mindestens einer dieser Badzusammensetzungen jeweils 0,005 bis 4,5 g/L, 0,01 bis 4 g/L, 0,015 bis 3 g/L, 0,02 bis 2,5 g/L, 0,03 bis 2 g/L, 0,05 bis 2 g/L, 0,07 bis 1,5 g/L, 0,09 bis 1,2 g/L, 0,12 bis 1 g/L, 0,2 bis 0,8 g/L oder 0,4 bis 0,6 g/L berechnet auf das jeweilige Silan. Erste Versuche deuten an, dass Silan-Gehalte im Bereich von 0,05 bis 1 g/L in mindestens einer dieser Badzusammensetzungen ganz besonders bevorzugt sind.

Der Begriff "Silan" im Sinne der vorliegenden Anmeldung soll bedeuten, dass eine Silicium-haltige Verbindung zugesetzt wird oder zugesetzt ist, die ursprünglich auf einem Silan basiert und durch Einsatz in Wasser und bei den Bedingungen der Verwendung der entsprechenden wässerigen Zusammensetzung als Silan, Silanol oder/und Siloxan vorliegen kann. Der Begriff "Silan" wird hierbei für "Silane, Silanole, oder/und Siloxane" benutzt, die hierbei auch oft "Silan"-Gemische sind.

Üblicherweise wird hierbei von einem Zusatz als Silan ausgegangen, wobei das zugesetzte mindestens eine Silan oft zumindest teilweise hydrolysiert ist, wobei es oft beim ersten Kontakt mit Wasser oder Feuchtigkeit mindestens ein Silanol bildet, aus dem mindestens ein Siloxan und später gegebenenfalls auch mindestens ein Polysiloxan gebildet wird bzw. werden kann. Der Begriff "Kondensieren" im Sinne dieser Anmeldung bezeichnet alle Formen der Vernetzung, der Weitervernetzung und der weiteren chemischen Reaktionen der Silane über Silanole zu Siloxanen und gegebenenfalls in einer sehr dünnen Schicht auf der metallischen Oberfläche nach einer Trocknung möglicherweise auch zu Polysiloxanen. Hierbei kann sich eine Vielfalt an Silicium-haltigen Verbindungen bilden, insbesondere eine größere Zahl chemisch ähnlicher Verbindungen einschließlich der Verbindungen mit unterschiedlichen Molekülgrößen aufgrund unterschiedlicher Kondensationsgrade, was sich auch bis in die Ausbildung einer sehr dünnen Schicht auswirken kann, so dass auch in dieser Schicht oft mehrere ähnliche Verbindungen vorliegen.

In der Vergangenheit wurde ein Silan wässerigen Zusammensetzungen nicht oder nur unter seltenen Umständen zugesetzt, weil ein Silan als Vernetzungsmittel, Binder, Konversionsmittel, reaktive Substanz für organische Polymere/Copolymere oder/und ausnahmsweise auch als Stabilisierungsmittel angesehen wurde, so dass Silane nur Konversionszusammensetzungen insbesondere der 2. Art sowie Primern und Lacken zugesetzt worden waren. Das Silan diente dann häufig nur der Abwandlung jener Substanzen oder Zusammensetzungen, die z.B. organische Polymere/Copolymere als Hauptkomponente enthielten oder als Silan-Vernetzungsmittel gegebenenfalls auch als Hauptkomponente zur Herstellung einer besonders korrosionsbeständigen und haftvermittelnden Konversionsbeschichtung.

Bei der Herstellung einer erfindungsgemäßen wässerigen Zusammensetzung ist insbesondere darauf zu achten, dass sich die der wässerigen Zusammensetzung zugesetzten Silane, Silanole oder/und Siloxane homogen verteilen, gegebenenfalls durch Rühren, um eine homogene Verteilung zu erzielen. Daher kann es vorteilhaft sein, gut wasserlösliche Silane, Silanole oder/und Siloxane einzusetzen, insbesondere solche mit einer Wasserlöslichkeit bei 20 °C von mehr als 5 g/L.

Besonders bevorzugt ist, dass bei der Herstellung einer erfindungsgemäßen wässerigen Silan-haltigen Zusammensetzung jeweils mindestens ein Silan, Silanol oder/und Siloxan mit mindestens einer Alkoxygruppe, mit mindestens einer Amidogruppe, mit mindestens einer Aminogruppe, mit mindestens einer Harnstoffgruppe oder/und mit mindestens einer Iminogruppe zugesetzt wird und dann in der wässerigen Silan-haltigen Zusammensetzung enthalten ist.

Ganz besonders bevorzugt ist, dass bei der Herstellung einer erfindungsgemäßen wässerigen Silan-haltigen Zusammensetzung jeweils mindestens ein Alkoxysilan, Alkoxysilanol oder/und Alkoxysiloxan mit mindestens einer Amidogruppe, mit mindestens einer oder mit mindestens zwei Aminogruppen, mit mindestens einer Harnstoffgruppe oder/und mit mindestens einer Iminogruppe zugesetzt wird und dann in der entsprechenden wässerigen Silan-haltigen Zusammensetzung enthalten ist.

Ganz besonders bevorzugt ist, dass bei der Herstellung einer erfindungsgemäßen wässerigen Silan-haltigen Zusammensetzung jeweils mindestens ein Alkoxysilan, Alkoxysilanol oder/und Alkoxysiloxan mit mindestens einer Amidogruppe, mit mindestens einer Aminogruppe, mit mindestens einer Harnstoffgruppe oder/und mit mindestens einer Iminogruppe pro Molekül zugesetzt wird und dann in der entsprechenden wässerigen Silan-haltigen Zusammensetzung enthalten ist.

Ganz besonders bevorzugt ist, dass bei der Herstellung einer erfindungsgemäßen wässerigen Silan-haltigen Zusammensetzung jeweils mindestens einem Silan, Silanol oder/und Siloxan mit mindestens zwei Aminogruppen, mit mindestens drei Aminogruppen, mit mindestens vier Aminogruppen, mit mindestens fünf Aminogruppen oder/und mit mindestens sechs Aminogruppen pro Molekül oder/und mit mindestens zwei, mindestens drei oder mehr als drei Alkoxygruppen pro Molekül zugesetzt wird und dann in der entsprechenden wässerigen Silan-haltigen Zusammensetzung enthalten ist.

Ganz besonders bevorzugt ist, dass bei der Herstellung einer erfindungsgemäßen wässerigen Silan-haltigen Zusammensetzung jeweils mindestens ein Alkoxysilan, Alkoxysilanol oder/und Alkoxysiloxan mit mindestens zwei Amidogruppen, mit mindestens zwei Aminogruppen, mit mindestens zwei Harnstoffgruppen oder/und mit mindestens zwei Iminogruppen pro Molekül zugesetzt wird und dann in der entsprechenden wässerigen Silan-haltigen Zusammensetzung enthalten ist.

Ganz besonders bevorzugt ist, dass bei der Herstellung einer erfindungsgemäßen wässerigen Silan-haltigen Zusammensetzung jeweils mindestens ein Alkoxysilan, Alkoxysilanol oder/und Alkoxysiloxan mit zwei, drei oder mehr als drei Aminogruppen pro Molekül zugesetzt wird und dann in der entsprechenden wässerigen Silan-haltigen Zusammensetzung enthalten ist.

Ganz besonders bevorzugt enthält die wässerige Silan-haltige Zusammensetzung einen Gehalt an jeweils mindestens einem Silan, Silanol oder/und Siloxan mit jeweils mindestens einer Gruppe pro Molekül ausgewählt aus Aminoalkylgruppen, Alkylaminoalkylgruppen, Aminoalkylaminoalkylgruppen oder/und Alkylaminogruppen.

Besonders bevorzugt ist hierbei mindestens ein Silan oder/und mindestens ein entsprechendes Silanol oder/und Siloxan aus folgender Liste auf Basis von
3-[2-(2-Aminoalkylamino)alkylamino]alkyltrialkoxysilan,
4-Amino-dialkylalkyltrialkoxysilan,
4-Amino-dialkylalkylalkyldialkoxysilan,
Aminoalkylaminoalkyltrialkoxysilan,
Aminoalkylaminoalkylalkyldialkoxysilan,
Aminoalkyltrialkoxysilan,
Bis-(trialkoxysilylalkyl)amin,
Bis-(trialkoxysilyl)ethan,
Gamma-Aminoalkyltrialkoxysilan,
Gamma-(trialkoxysilylalkyl)dialkylentriamin,
Gamma-Ureidoalkyltrialkoxysilan,
N-2-Aminoalkyl-3-aminoproplyltrialkoxysilan,
N-(3-(Trialkoxysilyl)alkyl)alkylendiamin,
N-Alkylaminoisoalkyltrialkoxysilan,
N-(Aminoalkyl)aminoalkylalkyldialkoxysilan,
N-beta-(aminoalkyl)-gamma-aminoalkyltrialkoxysilan,
N-(gamma-trialkoxysilylalkyl)dialkylentriamin oder/und
Poly(aminoalkyl)alkyldialkoxysilan,
wobei insbesondere solche Verbindungen aus dieser Liste besonders bevorzugt sind, bei denen die Alkylgruppe unabhängig voneinander eine Methyl-, Ethyl- oder/und Propylgruppe ist.

Ganz besonders bevorzugt ist die Verwendung eines Silan-Zusatzes in einer wässerigen Zusammensetzung zur Vermeidung von Stippen auf Zink-haltigen metallischen Oberflächen ausgewählt aus 1.) einer wässerigen Reinigungszusammensetzung, 2.) aus einer wässerigen Spülflüssigkeit - insbesondere in einer Spülflüssigkeit zum Abkühlen oder/und vor, inmitten oder/und nach einem Reinigen in einer wässerigen Reinigungszusammensetzung ohne oder mit einem Silan-Zusatz und gegebenenfalls vor einem Aktivieren in einer wässerigen Aktivierungszusammensetzung - oder/und 3.) aus einer wässerigen Aktivierungszusammensetzung vor einem Phosphatieren oder dass bei der Herstellung einer wässerigen Silan-haltigen Zusammensetzung jeweils mindestens ein Silan, Silanol oder/und Siloxan ausgewählt aus folgenden Silan-Verbindungen im Bereich von 0,001 bis 5 g/L berechnet auf das jeweilige Silan zugesetzt wird und dann in der entsprechenden wässerigen Silan-haltigen Zusammensetzung im Bereich von 0,001 bis 5 g/L berechnet auf das jeweilige Silan enthalten ist und
a) dass bei der Herstellung einer erfindungsgemäßen wässerigen Silanhaltigen Zusammensetzung jeweils mindestens ein Silan, Silanol oder/und Siloxan mit jeweils mindestens einer Gruppe pro Molekül ausgewählt aus Alkoxygruppen, Amidogruppen, Aminogruppen, Harnstoffgruppen und Iminogruppen zugesetzt wird und dann in der entsprechenden wässerigen Silan-haltigen Zusammensetzung enthalten ist,
b) dass bei der Herstellung einer erfindungsgemäßen wässerigen Silanhaltigen Zusammensetzung jeweils mindestens ein Silan, Silanol oder/und Siloxan ausgewählt aus folgenden Silan-Verbindungen zugesetzt wird und dann in der entsprechenden wässerigen Silan-haltigen Zusammensetzung enthalten ist:
   3-[2-(2-Aminoalkylamino)alkylamino]alkyltrialkoxysilan,
   4-Amino-dialkylalkyltrialkoxysilan,
   4-Amino-dialkylalkylalkyldialkoxysilan,
   Aminoalkylaminoalkyltrialkoxysilan,
   Aminoalkylaminoalkylalkyldialkoxysilan,
   Aminoalkyltrialkoxysilan,
   Bis-(trialkoxysilylalkyl)amin,
   Bis-(trialkoxysilyl)ethan,
   Gamma-Aminoalkyltrialkoxysilan,
   Gamma-(trialkoxysilylalkyl)dialkylentriamin,
   Gamma-Ureidoalkyltrialkoxysilan,
   N-2-Aminoalkyl-3-aminoproplyltrialkoxysilan,
   N-(3-(Trialkoxysilyl)alkyl)alkylendiamin,
   N-Alkylaminoisoalkyltrialkoxysilan,
   N-(Aminoalkyl)aminoalkylalkyldialkoxysilan,
   N-beta-(aminoalkyl)-gamma-aminoalkyltrialkoxysilan,
   N-(gamma-trialkoxysilylalkyl)dialkylentriamin oder/und
   Poly(aminoalkyl)alkyldialkoxysilan,
   wobei die Alkylgruppen unabhängig voneinander eine Methyl-, Ethyl- oder/und Propylgruppe darstellen oder/und
c) dass bei der Herstellung einer erfindungsgemäßen wässerigen Silanhaltigen Zusammensetzung jeweils mindestens ein Silan, Silanol oder/und Siloxan ausgewählt aus Silan-Verbindungen auf Basis von bis(Trialkoxysilylpropyl)amin, auf Basis von N-(3-(Trialkoxysilyl)propyl)ethylendiamin oder/und auf Basis von 3-[2-(2-Aminoalkylamino)alkylamino]propyltrialkoxysilan zugesetzt wird und dann in der entsprechenden wässerigen Silan-haltigen Zusammensetzung enthalten ist.

Bei Verwendung von mindestens einem dieser Silane wie z.B. ausgewählt aus der oben zuerst aufgeführten Liste ist darauf zu achten, dass die Hydrolyse und die beginnende Kondensation teilweise sehr schnell verlaufen können. Vielfach ist es bevorzugt, die zuzusetzenden Silane vor dem Zusetzen zu hydrolysieren. Wenn bereits Silanol in einer wässerigen Lösung vorliegt, können oft auch schnell Siloxane auftreten.

### 1.) Reinigungszusammensetzungen, Reinigungsbäder:

Vorzugsweise weist die erfindungsgemäße wässerige Reinigungszusammensetzung einen pH-Wert im Bereich von 3 bis 14, von 5 bis 13,5, von 6 bis 13 oder von 7 bis 12 auf. Die Zusammensetzung der Reinigungsbäder ist - wenn vom Silan-Gehalt abgesehen wird - grundsätzlich bekannt. Vorzugsweise enthält sie mindestens ein Tensid bei einem Gesamttensidgehalt im Bereich von 0,01 bis 10 g/L, wobei vorzugsweise mindestens ein nichtionisches Tensid verwendet wird und wobei gegebenenfalls auch jeweils mindestens ein anionisches, kationisches oder/und amphoteres Tensid enthalten sein kann.

Bevorzugt ist die Verwendung eines Silan-Zusatzes in einer erfindungsgemäßen wässerigen Reinigungszusammensetzung mit einem pH-Wert im Bereich von 3 bis 14, die einen Gesamttensidgehalt im Bereich von 0,01 bis 10 g/L aufweist und mindestens ein nichtionisches Tensid enthält.

Gegebenenfalls weist sie außerdem auch ein Reinigergerüst im Gesamtgehalt im Bereich von 0,01 bis 100 g/L auf. Das Reinigergerüst ist vorzugsweise eines mit mindestens zwei Substanzen ausgewählt aus solchen auf Basis von Komplexbildner, Lösevermittler, Silicat, Kaliumhydroxid, Natriumhydroxid, Borat, Carbonat, Orthophosphat, Alkanolamin oder/und kondensiertem Phosphat. Als Komplexbildner können insbesondere solche verwendet werden auf Basis von Carbonsäure, Phosphonsäure oder/und Phenolverbindung, insbesondere solche auf Basis von Aminocarbonsäure, Hydroxycarbonsäure, Polycarbonsäure, Polyoxycarbonsäure, Phosphonsäure, Aminophosphonsäure, Hydroxyphosphonsäure, Tannin oder/und Gallussäure, ganz besonders bevorzugt solche auf Basis von Citrat, Gluconat, Glucoheptonat, Heptonat oder/und 1-Hydroxyethan-(1,1-diphosphonsäure). Als Lösevermittler kann bei Bedarf mindestens eine Verbindung z.B. ausgewählt aus Cumolsulfonaten, Phosphonsäureestern, Salzen einer Carbonsäure oder/und mehrwertigen Alkoholen eingesetzt werden. Als Metallkationen können neben Alkalimetallionen gegebenenfalls auch Schwermetallionen wie z.B. Eisenionen zugesetzt werden. Darüber hinaus treten im Einsatz oft Verunreinigungen im Bereich von 0,001 bis 20 g/L, insbesondere oft anionische Verunreinigungen wie z.B. Öl-Bestandteile, auf.

Besonders bevorzugt ist die Verwendung eines Silan-Zusatzes in einer erfindungsgemäßen wässerigen Reinigungszusammensetzung mit einem Gehalt an Schwermetallionen wie z.B. Eisenionen und an Komplexbildner oder in einer wässerigen Reinigungszusammensetzung oder/und in einer wässerigen Spülflüssigkeit vor einer Behandlung mit einer wässerigen Passivierungszusammensetzung mit einem Gehalt an Komplexbildner und an Metallionen wie z.B. Aluminium oder/und an Schwermetallionen wie z.B. Chrom(III), Eisen, Mangan oder/und Zink.

Wenn einer wässerigen Reinigungszusammensetzung ein Silan zugesetzt wird, ist auf die Verträglichkeit dieses Silans bei dem entsprechenden pH-Wert zu achten, was bei den meisten wässerigen Reinigungszusammensetzungen keine Maßnahmen erfordert.

### 2.) Spülflüssigkeit, Spülbad:

Vorzugsweise weist die erfindungsgemäße wässerige Spülflüssigkeit einen pH-Wert im Bereich von 3 bis 14, von 5 bis 13,5, von 6 bis 13 oder von 7 bis 12 auf. Das Spülbad wird oft Wasser in Stadtwasserqualität aufweisen, kann aber auch auf anderen Wasserqualitäten wie z.B. vollentsalztem Wasser basieren. Der Spülflüssigkeit kann bei Bedarf auch mindestens eine weitere Substanz zugesetzt werden/sein, insbesondere mindestens ein Tensid, Anteile eines Reinigergerüstes, mindestens ein Amin, ein Nitrit oder/und mindestens einen Komplexbildner, wobei die zugesetzten Mengen vorzugsweise jeweils im Bereich von 0,001 bis 5 g/L liegen. Die Zusammensetzung der Spülbäder ist - wenn vom Silan-Gehalt abgesehen wird - grundsätzlich bekannt.

Darüber hinaus kann die Spülflüssigkeit auch im Einsatz eingeschleppte Bestandteile enthalten, insbesondere solche aus einer vorherigen Reinigungszone, so dass sie dann oft mindestens ein Tensid bei einem Gesamttensidgehalt im Bereich von 0,001 bis 5 g/L enthält, wobei oft mindestens ein nichtionisches Tensid auftritt und wobei gegebenenfalls auch jeweils mindestens ein anionisches, kationisches oder/und amphoteres Tensid enthalten sein kann. Gegebenenfalls kann die wässerige Spülflüssigkeit außerdem auch ein Reinigergerüst im Gesamtgehalt im Bereich von 0,001 bis 30 g/L enthalten. Das Reinigergerüst ist dann insbesondere eines mit mindestens zwei Substanzen ausgewählt aus solchen auf Basis von Komplexbildner, Lösevermittler, Silicat, Kaliumhydroxid, Natriumhydroxid, Borat, Carbonat, Orthophosphat, Alkanolamin oder/und kondensiertem Phosphat. Als Komplexbildner können insbesondere solche auftreten auf Basis von Carbonsäure, Phosphonsäure oder/und Phenolverbindung, insbesondere solche auf Basis von Aminocarbonsäure, Hydroxycarbonsäure, Polycarbonsäure, Polyoxycarbonsäure, Phosphonsäure, Aminophosphonsäure, Hydroxyphosphonsäure, Tannin oder/und Gallussäure, ganz besonders bevorzugt solche auf Basis von Citrat, Gluconat, Glucoheptonat, Heptonat oder/und 1-Hydroxyethan-(1,1-diphosphonsäure). Als Lösevermittler kann gegebenenfalls auch mindestens eine Verbindung z.B. ausgewählt aus Cumolsulfonaten, Phosphonsäureestern, Salzen einer Carbonsäure oder/und mehrwertigen Alkoholen vorhanden sein. Darüber hinaus treten im Einsatz oft Verunreinigungen im Bereich von 0,001 bis 5 g/L, insbesondere oft anionische Verunreinigungen wie z.B. Öl-Bestandteile, auf.

Die Leitfähigkeit der wässerigen Spülflüssigkeit liegt vorzugsweise im Bereich von 1 bis 20000 µS/cm, insbesondere im Bereich von 10 bis 6000 µS/cm, und meistens im Bereich von 200 bis 4000 µS/cm, insbesondere dann höhere Werte, wenn die Spülflüssigkeit mindestens einen Zusatz enthält oder/und z.B. mit Anteilen aus einem Reiniger verschmutzt ist.

Auch ein Abschreckbad oder Abkühlbad z.B. nach einem Feuerverzinken oder nach einem Vergüten wird als Spülbad mit einer wässerigen Spülflüssigkeit im Sinne dieser Erfindung angesehen.

Wenn einer wässerigen Spülflüssigkeit ein Silan zugesetzt wird, ist auf die Verträglichkeit dieses Silans bei dem entsprechenden pH-Wert zu achten, was bei den meisten wässerigen Spülflüssigkeiten keine Maßnahmen erfordert.

### 3.) Aktivierungszusammensetzung, Aktivierungsbad:

Vorzugsweise weist die erfindungsgemäße wässerige Aktivierungszusammensetzung einen pH-Wert im Bereich von 3 bis 14, von 5 bis 13,5, von 6 bis 13 oder von 7 bis 12 auf. Die Zusammensetzung der Aktivierungsbäder ist-wenn vom Silan-Gehalt abgesehen wird - grundsätzlich bekannt.

Es gibt zwei grundsätzlich verschiedene Arten an Aktivierungszusammensetzungen:
A) Aktivierungszusammensetzungen auf Basis von Me^{2+/3+}-Phosphatpartikeln, die oft durch Mahlen gewonnen werden und die oft eine mittlere Partikelkorngröße von bis zu 3 µm und gegebenenfalls einen Gehalt an weiteren Substanzen wie z.B. Dispergiermittel bzw. wie z.B. Polyacrylat, Polycarbonsäure oder/und Polycarboxylatether, Copolymer, Phosphonsäure, Verdickungsmittel, Tensid oder/und Additive wie z.B. Biocid aufweisen können.
B) Aktivierungszusammensetzungen auf Basis von kolloidalem Titanphosphat und in Wasser gelöstem oder in Wasser löslichem Orthophosphat, die oft zusätzlich kondensiertes Phosphat, Tensid, Stabilisierungsmittel, Verdickungsmittel oder/und Biocid enthalten.

### Zu A) Aktivierungszusammensetzungen auf Basis von Phosphatpartikeln:

EP 1 566 466 B1 lehrt Aktivierungszusammensetzungen auf Basis von Phosphatpartikeln von zwei- oder/und dreiwertigen Kationen, die eine mittlere Partikelkorngröße von bis zu 3 µm aufweisen, und die einen Gehalt an Carboxylgruppen aufweisendem Copolymer enthalten. EP 1 930 475 A1 beschreibt wässerige Aktivierungszusammensetzungen auf Basis von Me^{2+/3+}-Phosphatpartikeln mit einer mittleren Partikelkorngröße von bis zu 3 µm, die einen Gehalt an "Silan-Alkoxid", Ti-Alkoxid oder/und Al-Alkoxid sowie ein Stabilisierungsmittel aufweisen.

Darüber hinaus kann die Aktivierungszusammensetzung auch im Einsatz eingeschleppte Bestandteile enthalten, insbesondere solche aus einer vorherigen Reinigungszone oder/und aus einer vorherigen Spülzone, so dass sie dann oft mindestens ein Tensid bei einem Gesamttensidgehalt im Bereich von 0,001 bis 5 g/L enthält, wobei oft mindestens ein nichtionisches Tensid auftritt und wobei gegebenenfalls auch jeweils mindestens ein anionisches, kationisches oder/und amphoteres Tensid enthalten sein kann. Gegebenenfalls kann die wässerige Aktivierungszusammensetzung außerdem auch ein Reinigergerüst im Gesamtgehalt im Bereich von 0,001 bis 30 g/L enthalten. Das Reinigergerüst ist dann insbesondere eines mit mindestens zwei Substanzen ausgewählt aus solchen auf Basis von Komplexbildner, Lösevermittler, Silicat, Kaliumhydroxid, Natriumhydroxid, Borat, Carbonat, Orthophosphat, Alkanolamin oder/und kondensiertem Phosphat. Als Komplexbildner können insbesondere solche auftreten auf Basis von Carbonsäure, Phosphonsäure oder/und Phenolverbindung, insbesondere solche auf Basis von Aminocarbonsäure, Hydroxycarbonsäure, Polycarbonsäure, Polyoxycarbonsäure, Phosphonsäure, Aminophosphonsäure, Hydroxyphosphonsäure, Tannin oder/und Gallussäure, ganz besonders bevorzugt solche auf Basis von Citrat, Gluconat, Glucoheptonat, Heptonat oder/und 1-Hydroxyethan-(1,1-diphosphonsäure). Als Lösevermittler kann gegebenenfalls auch mindestens eine Verbindung z.B. ausgewählt aus Cumolsulfonaten, Phosphonsäureestern, Salzen einer Carbonsäure oder/und mehrwertigen Alkoholen vorhanden sein. Darüber hinaus treten im Einsatz oft Verunreinigungen im Bereich von 0,001 bis 5 g/L, insbesondere oft anionische Verunreinigungen wie z.B. Öl-Bestandteile, auf.

Die erfindungsgemäße wässerige Aktivierungszusammensetzung A) enthält vorzugsweise 0,01 bis 20 g/L an Me^{2+/3+}-Phosphatpartikeln mit einer mittleren Partikelkorngröße von bis zu 3 µm, gegebenenfalls mindestens ein Dispergiermittel, Stabilisierungsmittel oder/und Verdickungsmittel wie z.B. solche auf Basis von Aminen, Phenolverbindung, Phytinsäure, Phosphonsäure, Polyphosphorsäure, Harzen mit Phosphongruppen, Polyacrylat, Carboxylatgruppen aufweisendes Copolymer, Vinylharz, Saccharid, Polycarbonsäure, Polycarboxylatether, Al-Alkoxid, Ti-Alkoxid, Polyaminosäure, Phosphorsäureester oder/und Schichtsilicat wie z.B. auf Basis von Hectorit im Bereich von 0,001 bis 40 g/L, gegebenenfalls Nitrit sowie gegebenenfalls mindestens ein weiteres Additiv wie z.B. ein Biozid im Bereich von 0,001 bis 2 g/L.

Besonders bevorzugt ist die Verwendung eines Silan-Zusatzes zur Vermeidung von Stippen auf Zink-haltigen metallischen Oberflächen in einer erfindungsgemäßen wässerigen Aktivierungszusammensetzung A) auf Basis von Metallphosphatpartikeln von zwei- oder/und dreiwertigen Metallen, insbesondere von Metallorthophosphatpartikeln von zwei- oder/und dreiwertigen Metallen, mit einer mittleren Partikelkorngröße von bis zu 3 µm und von mindestens einer weiteren Substanz ausgewählt aus Dispergiermitteln, Verdickungsmitteln, Tensiden und Additiven wie z.B. Biociden.

Wenn einer wässerigen Aktivierungszusammensetzung A) ein Silan zugesetzt wird, ist auf die Verträglichkeit dieses Silans bei dem entsprechenden pH-Wert zu achten, was bei den meisten wässerigen Aktivierungszusammensetzungen keine Maßnahmen erfordert.

### Zu B) Aktivierungszusammensetzungen auf Basis von kolloidalem Titanphosphat:

WO 2010/066765 A1 lehrt Verfahren zum Phosphatieren von metallischen Oberflächen, bei denen die metallischen Oberflächen vor dem Phosphatieren mit einem wässerigen kolloidalen Aktivierungsmittel auf Basis von Titanphosphat vor dem Phosphatieren behandelt werden, sowie entsprechende Aktivierungsmittel, um die Stabilitätsdauer des Aktivierungsmittels im Einsatz zu verlängern und um die Temperaturstabilität beim Aktivieren vor einem Phosphatieren zu erhöhen. Als Zusatz hatten sich bei den Beispielen nur zwei Alkoxysilane mit mindestens einer organischen Gruppe bewährt, nämlich bis(3-Triethoxysilylpropyl)amin (= Silan-Typ 2) und vor allem bis(3-Trimethoxysilylpropyl)amin (= Silan-Typ 1), aber kein anderes Silan wie z.B. Triaminofunktionelles Silan. DE 37 31 049 A1 offenbart Verfahren zur Herstellung von aktivierenden Titanphosphaten für die Zinkphosphatierung durch Umsetzung einer Titanverbindung mit einfachen oder kondensierten Phosphaten in wässeriger Phase unter Verwendung von Titan(IV)-Verbindungen unter den Bedingungen einer hydrothermalen Synthese mit wasserlöslichen Phosphaten und unter Eintrocknung zur Herstellung von pulverförmigem Aktivierungsmittel. EP 0 454 211 A1 betrifft Verfahren zum Aufbringen von Phosphatüberzügen auf Metalloberflächen durch Aktivieren mit einem Aktivierungsmittel auf Basis von Titan, Orthophosphat, Kupfer und Alkalimetall sowie durch Zinkphosphatieren.

Die erfindungsgemäße wässerige Aktivierungszusammensetzung B) enthält vorzugsweise 0,001 bis 10 g/L an insbesondere kolloidalem Titanphosphat, 0,005 bis 30 g/L an wassergelöstem Orthophosphat, gegebenenfalls mindestens ein kondensiertes Phosphat im Bereich von 0,001 bis 30 g/L, oft mindestens ein Tensid im Bereich von 0,005 bis 5 g/L, gegebenenfalls Verdickungsmittel wie z.B. auf Basis von Biopolymer, gegebenenfalls Stabilisierungsmittel wie z.B. auf Basis von Maleinsäureanhydrid-Copolymer und gegebenenfalls 0,001 bis 2 g/L Biocid.

Besonders bevorzugt ist die Verwendung eines Silan-Zusatzes zur Vermeidung von Stippen auf Zink-haltigen metallischen Oberflächen in einer erfindungsgemäßen wässerigen Aktivierungszusammensetzung B) auf Basis von 0,001 bis 10 g/L an insbesondere kolloidalem Titanphosphat, von 0,005 bis 30 g/L an wassergelöstem Orthophosphat und von mindestens einer weiteren Substanz ausgewählt aus kondensierten Phosphaten, Tensiden, Stabilisierungsmitteln, Verdickungsmitteln und Biociden.

Darüber hinaus kann die Aktivierungszusammensetzung auch im Einsatz eingeschleppte Bestandteile enthalten, insbesondere solche aus einer vorherigen Reinigungszone oder/und aus einer vorherigen Spülzone, so dass sie dann oft mindestens ein Tensid bei einem Gesamttensidgehalt im Bereich von 0,001 bis 5 g/L enthält, wobei oft mindestens ein nichtionisches Tensid auftritt und wobei gegebenenfalls auch jeweils mindestens ein anionisches, kationisches oder/und amphoteres Tensid enthalten sein kann. Gegebenenfalls kann die wässerige Aktivierungszusammensetzung außerdem auch ein Reinigergerüst im Gesamtgehalt im Bereich von 0,001 bis 30 g/L enthalten. Das Reinigergerüst ist dann insbesondere eines mit mindestens zwei Substanzen ausgewählt aus solchen auf Basis von Komplexbildner, Lösevermittler, Silicat, Kaliumhydroxid, Natriumhydroxid, Borat, Carbonat, Orthophosphat, Alkanolamin oder/und kondensiertem Phosphat. Als Komplexbildner können insbesondere solche auftreten auf Basis von Carbonsäure, Phosphonsäure oder/und Phenolverbindung, insbesondere solche auf Basis von Aminocarbonsäure, Hydroxycarbonsäure, Polycarbonsäure, Polyoxycarbonsäure, Phosphonsäure, Aminophosphonsäure, Hydroxyphosphonsäure, Tannin oder/und Gallussäure, ganz besonders bevorzugt solche auf Basis von Citrat, Gluconat, Glucoheptonat, Heptonat oder/und 1-Hydroxyethan-(1,1-diphosphonsäure). Als Lösevermittler kann gegebenenfalls auch mindestens eine Verbindung z.B. ausgewählt aus Cumolsulfonaten, Phosphonsäureestern, Salzen einer Carbonsäure oder/und mehrwertigen Alkoholen vorhanden sein. Darüber hinaus treten im Einsatz oft Verunreinigungen im Bereich von 0,001 bis 5 g/L, insbesondere oft anionische Verunreinigungen wie z.B. Öl-Bestandteile, auf.

Wenn einer wässerigen Aktivierungszusammensetzung B) ein Silan zugesetzt wird, ist auf die Verträglichkeit dieses Silans bei dem entsprechenden pH-Wert zu achten, was bei den meisten wässerigen Aktivierungszusammensetzungen keine Maßnahmen erfordert.

### Überraschungseffekte:

Es war überraschend, dass mit einem Zusatz von einem Silan in einer wässerigen Reinigungszusammensetzung die Bildung von Stippen unterdrückt und auf Dauer vermieden werden konnte, so dass einerseits die mit einer Zinkphosphatierungslösung phosphatierten und andererseits die mit einer Silan und Titan oder/und Zirkonium enthaltenden wässerigen Konversionslösung vorbehandelten Oberflächen frei von Stippen, streifenförmigen Markierungen und staubigen Belägen auf Dauer gehalten werden konnten, so dass auch die mit einem Elektrotauchlack, Pulverlack oder Naßlack und gegebenenfalls weiteren Lackschichten versehenen phosphatierten Oberflächen fehlerfrei ausgebildet werden konnten.

Es war auch überraschend, dass mit einem Zusatz von einem Silan in einer wässerigen Spülflüssigkeit insbesondere nach einem Reinigen in einer wässerigen Reinigungszusammensetzung ohne oder mit einem Silan-Zusatz, und gegebenenfalls vor einem Aktivieren in einer wässerigen Aktivierungszusammensetzung ohne oder mit einem Silan-Zusatz vor einem nachfolgenden Phosphatieren und gegebenenfalls vor einem Vorbehandeln mit einer Mangan- oder Zinkphosphatierungslösung oder vor einem Kontaktieren mit einer Silan und Titan oder/und Zirkonium enthaltenden wässerigen Konversionslösung die Bildung von Stippen unterdrückt und auf Dauer vermieden werden konnte, so dass einerseits die mit einer Zinkphosphatierungslösung phosphatierten und andererseits die mit einer Silan und Titan oder/und Zirkonium enthaltenden wässerigen Konversionslösung vorbehandelten Oberflächen frei von Stippen, streifenförmigen Markierungen und staubigen Belägen auf Dauer gehalten werden konnten, so dass auch die mit einem Elektrotauchlack, Pulverlack oder Naßlack und gegebenenfalls auch mit weiteren Schichten von Lacken versehenen phosphatierten Oberflächen fehlerfrei ausgebildet werden konnten.

Es war auch überraschend, dass mit einem Zusatz von einem Silan in einer wässerigen Aktivierungszusammensetzung die Bildung von Stippen unterdrückt und auf Dauer vermieden werden konnte, so dass die mit einer Zinkphosphatierungslösung vorbehandelten Oberflächen frei von Stippen, streifenförmigen Markierungen und staubigen Belägen auf Dauer gehalten werden konnten, so dass auch die mit einem Elektrotauchlack, Pulverlack oder Naßlack und gegebenenfalls weiteren Lackschichten versehenen phosphatierten Oberflächen fehlerfrei ausgebildet werden konnten.

Es war auch überraschend, dass mit einem Zusatz von einem geeigneten Silan die Häufigkeit von Stippen deutlich verringert und teilweise sogar gänzlich vermieden werden konnten, so dass die phosphatierten Oberflächen auf Dauer frei von Stippen, teilweise aber auch mit schwächeren streifenförmigen Markierungen oder frei von diesen Markierungen und mit schwächeren staubigen Belägen oder auf Dauer frei von diesen Belägen gehalten werden konnten, so dass auch die mit einem Elektrotauchlack, Pulverlack oder Naßlack und gegebenenfalls weiteren Lackschichten versehenen phosphatierten Oberflächen fehlerfrei ausgebildet werden konnten.

Es war ferner überraschend, dass der Zusatz eines Silans insbesondere zu einer wässerigen Aktivierungszusammensetzung zu einer weiteren Verringerung der mittleren Kristallgröße z.B. um ca. 20 % insbesondere auf Aluminiumlegierungsoberflächen der Phosphatschicht führte, was das Phosphatierungsergebnis noch weiter verbesserte.

Es wird erwartet, dass das erfindungsgemäße Verfahren zu einer weiteren Verbesserung der Prozeßsicherheit und Umweltfreundlichkeit sowie zur Vermeidung der Handhabung von giftigen Chemikalien durch die Mitarbeiter an Linien zur Konversionsbeschichtung führt, da bisher üblicherweise nur die Zusammensetzung zum Konversionsbeschichten oder/und die davor liegenden genutzten Bäder mit einer wässerigen Reinigungszusammensetzung, mit einer wässerigen Spülflüssigkeit oder/und mit einer wässerigen Aktivierungszusammensetzung durch Zusatz von giftigem Nitrit abgewandelt wurden. Aber - wie auch ein Vergleichsbeispiel zeigt - kann mit dem Nitritzusatz nur die Stippenbildung unterdrückt oder vermieden werden, aber nicht die Ausbildung von streifenförmigen Markierungen oder/und staubigen Belägen auf Phosphatschichten.

Die nach dem erfindungsgemäßen Verfahren beschichteten metallischen Substrate können verwendet werden in der Automobilindustrie, für Schienenfahrzeuge, in der Luft- und Raumfahrtindustrie, im Apparatebau, im Maschinenbau, in der Bauindustrie, in der Möbelindustrie, für die Herstellung von Leitplanken, Lampen, Profilen, Verkleidungen oder Kleinteilen, für die Herstellung von Karosserien oder Karosserieteilen, von Einzelkomponenten, vormontierten oder verbundenen Elementen vorzugsweise in der Automobil- oder Luftfahrtindustrie, für die Herstellung von Geräten oder Anlagen, insbesondere von Haushaltsgeräten, Kontrolleinrichtungen, Prüfeinrichtungen oder Konstruktionselementen.

### Beispiele und Vergleichsbeispiele:

Die im Folgenden beschriebenen erfindungsgemäßen Beispiele (B) und die Vergleichsbeispiele (VB) sollen den Gegenstand der Erfindung näher erläutern.

Die wässerigen Badzusammensetzungen werden als Gemische einer wässerigen Aktivierungszusammensetzung A) mit einem Gehalt an 0,9 g/L Zinkphosphatpartikeln mit einer mittleren Partikelgröße von weniger als 1 µm gemessen mit dem Zetasizer von Malvern, 0,037 g/L Schichtsilicat auf Basis von Hectorit, 0,15 g/L Dispergiermittel auf Basis von Polyacrylat und 0,003 g/L Biozid sowie ohne und mit einem Zusatz entsprechend Tabelle 1 unter Verwendung von nicht-vorhydrolysierten oder von vorhydrolysierten Silanen hergestellt. Viele Gemische enthalten jeweils ein Silan und gegebenenfalls auch Gehalte an mindestens einem zweiten ähnlichen Silan, wobei auch hier vereinfachend von Silan und nicht von Silan, Silanol oder/und Siloxan gesprochen wird. Das Vorhydrolysieren kann je nach Silan auch über mehrere Tage bei Raumtemperatur unter kräftigem Rühren andauern, soweit die einzusetzenden Silane nicht bereits vom Lieferanten vorhydrolysiert vorliegen. Zum Vorhydrolysieren des Silans wird das Silan in Wasser im Überschuss gegeben und gegebenenfalls mit Essigsäure katalysiert. Allein wegen des Einstellens des pH-Wertes wurde Essigsäure nur bei einzelnen Ausführungsvarianten zugesetzt. In einigen Ausführungsvarianten ist Essigsäure als Katalysator für die Hydrolyse bereits enthalten. Ein kurzkettiger Alkohol kann bei der Hydrolyse entstehen, wurde aber nicht zugesetzt. Das fertige Gemisch wurde frisch eingesetzt.

Es wurden im Labor jeweils je Versuch (= je Beispiel oder Vergleichsbeispiel) und je Oberflächenmaterial drei Bleche aus kaltgewalztem Stahl CRS Gardobond^{®} C, beidseitig elektrolytisch verzinktem Stahl Gardobond^{®} G, beidseitig feuerverzinktem Stahl Gardobond^{®} EA und Aluminium AA6014 Gardobond^{®} 6014 der Chemetall GmbH verwendet.

Die Bleche wurden zuerst mit einer wässerigen Reinigungsflüssigkeit Gardoclean^{®} 854/5 der Chemetall GmbH bei einem pH-Wert von 10,5 im Tauchen bei 60 °C über 10 Minuten gereinigt und unmittelbar danach mit Leitungswasser über 30 Sekunden im Tauchen bei Raumtemperatur gespült. Die Aktivierung erfolgte hieran anschliessend mit einer wässerigen Aktivierungszusammensetzung A), die zuvor mit 3 g/L Aktivierungskonzentrat Gardolene^{®} V 6559 der Chemetall GmbH in flüssiger Form zu vollentsalztem Wasser zugesetzt worden war, wobei gerührt wurde.

Mit dieser zur Aktivierung vorbereiteten wässerigen Aktivierungs-Ausgangszusammensetzung ohne einen Gehalt an Silan, Silanol oder/und Siloxan wurden zusätzliche Bleche behandelt, um zuerst zu prüfen, ob mit der so eingestellten Aktivierungszusammensetzung und unter diesen Bedingungen eine größere Zahl deutlich sichtbarer und größerer Stippen gebildet werden. Da Stippen manchmal nur unter bestimmten Aktivierungsbedingungen entstehen, was auch von der Menge und Art von Verunreinigungen auf den eingesetzten Blechen und in der Badzusammensetzung abhängt, wurden die elektrische Leitfähigkeit des Aktivierungsbades durch Zusatz von Natrium- oder/und Kaliumorthophosphaten auf Werte im Bereich von 100 µS/cm bis 2000 µS/cm und der pH-Wert durch Zusatz von Natronlauge im Bereich von 8 bis 9,5 angepasst. Gegebenenfalls wurde auch die Temperatur auf Werte im Bereich von 20 bis 50 °C so angepasst, dass mit der auf diese Weise eingestellten Aktivierungszusammensetzung unter den Badbedingungen eine größere Zahl deutlich sichtbarer und größerer Stippen entsteht. Denn es mussten krasse Bedingungen für die Bildung von Stippen als Ausgangsbedingungen eingestellt werden, um deutliche Unterschiede zu ermitteln.

Diese Aktivierungs-Ausgangszusammensetzung wurde nach dieser Grundeinstellung für die Aktivierung aller Bleche aus allen Werkstoffvarianten und für möglichst viele Varianten an Zusatzstoffen, die jeweils einem Teil dieser angepassten Ausgangszusammensetzung zugesetzt wurden, möglichst lange beibehalten.

Wenn sich bei den weiteren Versuchen zeigte, dass die gebildeten Stippen unter den oben genannten Bedingungen nicht ausreichend zahlreich und groß waren, wurde die Ausgangszusammensetzung erneut angepasst, indem ihre elektrische Leitfähigkeit durch Zusatz von Natrium- oder/und Kaliumorthophosphaten auf Werte im Bereich von 2000 bis 4000 µS/cm und ihr pH-Wert durch Zusatz von Natronlauge auf den Bereich von 9,5 bis 10,5 angepasst wurden. Gegebenenfalls wurde auch die Temperatur erneut auf Werte im Bereich von 20 bis 50 °C so angepasst, dass mit der auf diese Weise eingestellten Aktivierungszusammensetzung unter den Badbedingungen eine größere Zahl deutlich sichtbarer und größerer Stippen entstand.

Zur Aktivierung mit der jeweils angepassten und gegebenenfalls durch mindestens einen Zusatzstoff entsprechend Tabelle 1 variierten wässerigen Aktivierungszusammensetzung wurde jeweils im Tauchen über 30 s gearbeitet. Unmittelbar danach wurde ohne Zwischenspülung mit Gardobond^{®} R 2600 der Chemetall GmbH zinkphosphatiert. Danach wurde der nächste Aktivierungsversuch mit einer anderen Silan-haltigen Aktivierungszusammensetzung an den nächsten Blechen durchgeführt.

Die mit einer wässerigen ZinkManganNickelphosphatierungslösung (Trikationenphosphatierung) Gardobond^{®} R 2600 der Chemetall GmbH über 3 Minuten bei 55 °C im Tauchen zinkphosphatierten Bleche wurden anschließend 10 Sekunden mit Leitungswasser und danach 10 Sekunden mit vollentsalztem Wasser gespült sowie danach im Trockenschrank 10 Minuten bei 105 °C getrocknet. Alle Phosphatschichten waren nahezu geschlossen, sehr feinkörnig und fehlerfrei, wenn von den angegebenen Fehlern der Häufigkeit und Größe von Stippen, der mehr oder weniger starken Ausbildung von streifenförmigen Markierungen und von staubigen Belägen, die locker und leicht abwischbar auf der ansonsten einwandfreien Zinkphosphatschicht auflagen, abgesehen wird. Diese Fehler wurden mit bloßen Augen nach dem Phosphatieren oder nach dem Spülen oder nach dem Trocknen festgestellt und bewertet.

**Tabelle 1: Wirkung verschiedener Zusätze auf eine Aktivierungszusammensetzung A) mit Aussagen zur Häufigkeit und Größe der Stippen, zur Häufigkeit und Intensität der streifenförmigen Markierungen und zur Intensität der staubigen Beläge, wobei die Zahl der Kreuze die Intensität, Häufigkeit und Größe der der Fehlstellen angibt**

| B/ VB | Zusatz | Zusatz in g/L | Häufigkeit, Größe bzw. Intensität bei | | |
|---|---|---|---|---|---|
| | | | Stippen | Streifen | Staub |
| VB0 | - | 0 | xxx | stark | xxx |
| VB1 | Dimethylethanolamin | 0,500 | xxx | schwach | xxx |
| | | 1,000 | xx | schwach | xxx |
| VB2 | Na-Salz der Ethylendiamintetraessigsäure | 0,050 | xx | schwach | xxx |
| | | 0,150 | xxx | schwach | xxx |
| | | 0,350 | xxx | keine | xxx |
| VB3 | Methyldiethanolamin | 0,500 | x | schwach | xxx |
| | | 1,000 | x / - | schwach | xxx |
| VB4 | Natriumnitrit, gerechnet als NO₂ | 0,120 | - | schwach | xxx |
| VB5 | Tetrakaliumpyrophosphat | 1,000 | x | schwach | xx |
| VB6 | 3-Aminopropyltriethoxysilan nicht vorhydrolysiert | 0,050 | xxx | stark | xxx |
| | | 0,100 | xxx | stark | xxx |
| | | 0,250 | xxx | stark | xxx |
| | | 0,400 | xx | stark | xxx |
| | | 0,700 | xx | stark | xxx |
| VB7 | 3-Glycidoxypropyltrimethoxysilan nicht vorhydrolysiert | 0,100 | xx | schwach | xxx |
| | | 0,500 | xx | stark | xxx |
| VB8 | 3-Glycidoxypropyltrimethoxysilan vorhydrolysiert | 0,800 | xxx | stark | xxx |
| VB9 | Gamma-Ureidopropyltrimethoxysilan | 0,200 | xx | schwach | xxx |
| | | 0,500 | xx | schwach | xxx |
| B1 | bis(Trimethoxysilylpropyl)amin nicht vorhydrolysiert | 0,050 | xxx | schwach | x |
| | | 0,200 | xx | schwach | x |
| | | 0,500 | xx | schwach | x |
| | | 1,000 | - | schwach | x |
| B2 | N-(3-(Trimethoxysilyl)propyl)ethylendiamin nicht vorhydrolysiert | 0,050 | - | - | x |
| | | 0,500 | - | - | - |
| | | 1,000 | - | - | - |
| B3 | N-(3-(Trimethoxysilyl)propyl)ethylendiamin vorhydrolysiert | 0,014 | xx | stark | xxx |
| | | 0,028 | xx | stark | xx |
| | | 0,054 | x | schwach | xx |
| | | 0,080 | x | schwach | x |
| | | 0,100 | x | schwach | x |
| | | 0,200 | - | schwach | - |
| | | 0,500 | - | - | - |
| | | 1,000 | - | - | - |
| B4 | 3-[2-(2-Aminoethylamino)ethylamino]propyl-trimethoxysilan nicht vorhydrolysiert | 0,050 | - | schwach | x |
| | | 0,3 | - | schwach | - |
| | | 0,5 | - | - | - |
| B5 | 3-Aminopropyltriethoxysilan + N-(3-(Trimethoxysilyl)propyl)ethylendiamin beide vorhydrolysiert | 0,140 + 0,048 | - | schwach | - |
| | | 0,420 + 0,144 | - | - | - |

Tabelle 1 verdeutlicht, dass die unter vergleichbaren Bedingungen untersuchten Aktivierungszusammensetzungen B) je nach Art und Menge des Zusatzes deutlich unterschiedliche Wirkung auf die verschiedenen Fehlerarten ausüben können. Es zeigt sich, dass die eingesetzten Amine eine begrenzte positive Wirkung auf die Häufigkeit von Stippen oder/und auf die Intensität streifenförmiger Markierungen haben können, aber nicht auf die Ausbildung von staubigen Belägen. Es zeigt sich auch, dass ein Zusatz von Nitrit eine sehr positive Wirkung auf die Häufigkeit und Größe von Stippen, aber eine begrenzte positive Wirkung auf die Intensität streifenförmiger Markierungen haben kann und keine Wirkung auf die Ausbildung von staubigen Belägen entfaltet. Es zeigt sich ferner, dass ein Zusatz von Tetrakaliumpyrophosphat nur eine begrenzte positive Wirkung auf alle drei Fehlerarten ausüben kann.

Wenn statt dieser Verbindungen jeweils ein oder zwei Silane zugesetzt wurden, kann dies bei manchen Silanen zu einer begrenzten positiven Wirkung auf alle drei Fehlerarten und bei manchen Silanen zu einer sehr positiven Wirkung auf alle drei Fehlerarten führen, je nach dem Zusatz und je nachdem, ob der Zusatz vorhydrolysiert wurde oder nicht. Hierbei deutete sich an, dass Silane, Silanole oder/und Siloxane mit mehr als einer Aminogruppe eine bessere Wirkung zur Vermeidung von Fehlstellen beim Reinigen, Spülen oder/und Aktivieren ausüben und daher in dem erfindungsgemäßen Verfahren besonders gut geeignet sind.

## Patentansprüche

1. Verwendung eines Silan-Zusatzes zur Vermeidung von Stippen auf Zinkhaltigen metallischen Oberflächen
1.) in einer wässerigen Reinigungszusammensetzung,
2.) in einer wässerigen Spülflüssigkeit, die a) vor einem Reinigen, die b) inmitten mehrerer Reinigungszonen, die c) unmittelbar nach einem Reinigen oder/und die d) als Flüssigkeit zum Abkühlen verwendet wird, oder/und
3.) in einer wässerigen Aktivierungszusammensetzung, wobei der Gehalt an jeweils mindestens einem Silan, Silanol oder/und Siloxan in mindestens einer dieser wässerigen Zusammensetzungen im Bereich von 0,001 bis 5 g/L liegt berechnet auf das jeweilige Silan.

2. Verwendung eines Silan-Zusatzes nach Anspruch 1
1.) in einem wässerigen Reinigungsbad,
2.) in einem wässerigen Spülbad, dessen Flüssigkeit a) vor einem Reinigen, b) inmitten mehrerer Reinigungszonen, c) unmittelbar nach einem Reinigen oder/und d) zum Abkühlen verwendet wird, oder/und 3.) in einem wässerigen Aktivierungsbad, wobei der Gehalt an jeweils mindestens einem Silan, Silanol oder/und Siloxan in mindestens einem dieser wässerigen Bäder im Bereich von 0,001 bis 5 g/L liegt berechnet auf das jeweilige Silan.

3. Verwendung eines Silan-Zusatzes nach einem der Ansprüche 1 oder 2
1.) in der wässerigen Reinigungszusammensetzung einer Reinigungszone,
2.) in der wässerigen Spülflüssigkeit einer Spülzone, dessen Flüssigkeit a) vor einem Reinigen, b) inmitten mehrerer Reinigungszonen, c) unmittelbar nach einem Reinigen oder/und d) zum Abkühlen verwendet wird, oder/und
3.) in der wässerigen Aktivierungszusammensetzung einer Aktivierungszone einer Behandlungslinie, wobei der Silan-Gehalt in mindestens einer dieser Zonen im Bereich von 0,001 bis 5 g/L liegt berechnet auf das jeweilige Silan.

4. Verwendung eines Silan-Zusatzes nach mindestens einem der Ansprüche 1 bis 3 in mindestens einer wässerigen Zusammensetzung eines Bades oder einer Zone A) zum Reinigen, Spülen oder/und Aktivieren vor einem Phosphatieren oder B) zum Reinigen oder/und Spülen vor einem Passivieren oder Vorbehandeln mit einer wässerigen Konversionszusammensetzung mit einem Gehalt an Fluorid oder/und an Titan-, Hafnium- oder/und Zirkoniumkomplexfluorid, an Silan, an Metallkationen wie Mangan, an organischem Polymer/Copolymer oder/und an mindestens einem Additiv oder C) vor einer alkalischen, neutralen oder sauren wässerigen Passivierung mit einem Gehalt an Metallkationen, Komplexfluorid, Oxid, Phosphat, Silan, Silicat, organischem Polymer/Copolymer oder/und mindestens einem Additiv.

5. Verwendung eines Silan-Zusatzes nach mindestens einem der Ansprüche 1 bis 4 in mindestens einer wässerigen Zusammensetzung eines Bades oder einer Zone vor einem Alkaliphosphatieren, vor einem Manganphosphatieren oder vor einem Zinkphosphatieren.

6. Verwendung eines Silan-Zusatzes nach mindestens einem der Ansprüche 1 bis 5 in einer wässerigen Aktivierungszusammensetzung A) auf Basis von Metallphosphatpartikeln von zwei- oder/und dreiwertigen Metallen mit einer mittleren Partikelkorngröße von bis zu 3 µm und von mindestens einer weiteren Substanz ausgewählt aus Dispergiermitteln, Verdickungsmitteln, Tensiden und Additiven wie z.B. Biociden.

7. Verwendung eines Silan-Zusatzes nach mindestens einem der Ansprüche 1 bis 6 in einer wässerigen Aktivierungszusammensetzung B) auf Basis von 0,001 bis 10 g/L an insbesondere kolloidalem Titanphosphat, von 0,005 bis 30 g/L an wassergelöstem Orthophosphat und von mindestens einer weiteren Substanz ausgewählt aus kondensierten Phosphaten, Tensiden, Stabilisierungsmitteln, Verdickungsmitteln und Biociden.

8. Verwendung eines Silan-Zusatzes nach mindestens einem der Ansprüche 1 bis 7 in einer wässerigen Spülflüssigkeit mit einem pH-Wert im Bereich von 3 bis 14.

9. Verwendung eines Silan-Zusatzes nach mindestens einem der Ansprüche 1 bis 8 in einer wässerigen Reinigungszusammensetzung mit einem Gehalt an Schwermetallionen wie z.B. Eisenionen und an Komplexbildner oder in einer wässerigen Reinigungszusammensetzung oder/und in einer wässerigen Spülflüssigkeit vor einer Behandlung mit einer wässerigen Passivierungszusammensetzung mit einem Gehalt an Komplexbildner und an Metallionen wie z.B. Aluminium oder/und an Schwermetallionen wie z.B. Chrom(III), Eisen, Mangan oder/und Zink.

10. Verwendung eines Silan-Zusatzes nach mindestens einem der Ansprüche 1 bis 9 in einer wässerigen Reinigungszusammensetzung mit einem pH-Wert im Bereich von 3 bis 14, die einen Gesamttensidgehalt im Bereich von 0,01 bis 10 g/L aufweist und mindestens ein nichtionisches Tensid enthält.

11. Verwendung eines Silan-Zusatzes nach mindestens einem der Ansprüche 1 bis 10, wobei bei der Herstellung einer wässerigen Silan-haltigen Zusammensetzung jeweils mindestens ein Silan, Silanol oder/und Siloxan mit mindestens einer Alkoxygruppe, mit mindestens einer Amidogruppe, mit mindestens einer Aminogruppe, mit mindestens einer Harnstoffgruppe oder/und mit mindestens einer Iminogruppe pro Molekül zugesetzt wird und dann in der wässerigen Silan-haltigen Zusammensetzung enthalten ist.

12. Verwendung eines Silan-Zusatzes nach mindestens einem der Ansprüche 1 bis 11, wobei bei der Herstellung einer wässerigen Silan-haltigen Zusammensetzung jeweils mindestens ein Silan, Silanol oder/und Siloxan mit mindestens zwei Aminogruppen, mit mindestens drei Aminogruppen, mit mindestens vier Aminogruppen, mit mindestens fünf Aminogruppen oder/und mit mindestens sechs Aminogruppen pro Molekül oder/und mit mindestens zwei, mindestens drei oder mehr als drei Alkoxygruppen pro Molekül zugesetzt wird und dann in der entsprechenden wässerigen Silan-haltigen Zusammensetzung enthalten ist.

13. Verwendung eines Silan-Zusatzes nach mindestens einem der Ansprüche 1 bis 12, wobei bei der Herstellung einer wässerigen Silan-haltigen Zusammensetzung jeweils mindestens ein Alkoxysilan, Alkoxysilanol oder/und Alkoxysiloxan mit mindestens einer Amidogruppe, mit mindestens einer oder mit mindestens zwei Aminogruppen, mit mindestens einer Harnstoffgruppe oder/und mit mindestens einer Iminogruppe pro Molekül zugesetzt wird und dann in der entsprechenden wässerigen Silan-haltigen Zusammensetzung enthalten ist.

14. Verwendung eines Silan-Zusatzes nach mindestens einem der Ansprüche 1 bis 13, wobei bei der Herstellung einer wässerigen Silan-haltigen Zusammensetzung jeweils mindestens ein Alkoxysilan, Alkoxysilanol oder/und Alkoxysiloxan mit zwei, drei oder mehr als drei Aminogruppen pro Molekül zugesetzt wird und dann in der entsprechenden wässerigen Silan-haltigen Zusammensetzung enthalten ist.

15. Verwendung eines Silan-Zusatzes nach mindestens einem der Ansprüche 1 bis 14, wobei bei der Herstellung einer wässerigen Silan-haltigen Zusammensetzung jeweils mindestens ein Silan, Silanol oder/und Siloxan ausgewählt aus folgenden Silan-Verbindungen im Bereich von 0,001 bis 5 g/L berechnet auf das jeweilige Silan zugesetzt wird und dann in der entsprechenden wässerigen Silan-haltigen Zusammensetzung im Bereich von 0,001 bis 5 g/L berechnet auf das jeweilige Silan enthalten ist:
3-[2-(2-Aminoalkylamino)alkylamino]alkyltrialkoxysilan,
4-Amino-dialkylalkyltrialkoxysilan,
4-Amino-dialkylalkylalkyldialkoxysilan,
Aminoalkylaminoalkyltrialkoxysilan,
Aminoalkylaminoalkylalkyldialkoxysilan,
Aminoalkyltrialkoxysilan,
Bis-(trialkoxysilylalkyl)amin,
Bis-(trialkoxysilyl)ethan,
Gamma-Aminoalkyltrialkoxysilan,
Gamma-(trialkoxysilylalkyl)dialkylentriamin,
Gamma-Ureidoalkyltrialkoxysilan,
N-2-Aminoalkyl-3-aminoproplyltrialkoxysilan,
N-(3-(Trialkoxysilyl)alkyl)alkylendiamin,
N-Alkylaminoisoalkyltrialkoxysilan,
N-(Aminoalkyl)aminoalkylalkyldialkoxysilan,
N-beta-(aminoalkyl)-gamma-aminoalkyltrialkoxysilan,
N-(gamma-trialkoxysilylalkyl)dialkylentriamin oder/und
Poly(aminoalkyl)alkyldialkoxysilan,
wobei die Alkylgruppen unabhängig voneinander eine Methyl-, Ethyl- oder/und Propylgruppe darstellen.

16. Verwendung eines Silan-Zusatzes nach mindestens einem der Ansprüche 1 bis 15, wobei bei der Herstellung einer wässerigen Silan-haltigen Zusammensetzung jeweils mindestens ein Silan, Silanol oder/und Siloxan ausgewählt aus Silan-Verbindungen auf Basis von bis(Trialkoxysilylpropyl)amin, auf Basis von N-(3-(Trialkoxysilyl)propyl)ethylendiamin oder/und auf Basis von 3-[2-(2-Aminoalkylamino)alkylamino]propyltrialkoxysilan zugesetzt wird und dann in der entsprechenden wässerigen Silan-haltigen Zusammensetzung enthalten ist.

## Claims

1. Use of a silane additive for the avoidance of pinholes on zinc-containing metallic surfaces
1.) in an aqueous cleaning composition,
2.) in an aqueous rinsing liquid that is used a) prior to a cleaning process, b) in the midst of a plurality of cleaning zones, c) immediately after a cleaning process or/and d) as a liquid for cooling, or/and
3.) in an aqueous activation composition, wherein the content of in each case at least one silane, silanol or/and siloxane in at least one of these aqueous compositions lies in the range of 0.001 to 5 g/l, calculated in relation to the respective silane .

2. Use of a silane additive according to claim 1
1.) in an aqueous cleaning bath,
2.) in an aqueous rinsing bath, the liquid of which is used a) prior to a cleaning process, b) in the midst of a plurality of cleaning zones, c) immediately after a cleaning process or/and d) for cooling, or/and 3.) in an aqueous activation bath, wherein the content of in each case at least one silane, silanol or/and siloxane in at least one of these aqueous baths lies in the range of 0.001 to 5 g/l, calculated in relation to the respective silane.

3. Use of a silane additive according to one of claims 1 or 2
1.) in the aqueous cleaning composition of a cleaning zone,
2.) in the aqueous rinsing liquid of a rinsing zone, the liquid of which is used a) prior to a cleaning process, b) in the midst of a plurality of cleaning zones, c) immediately after a cleaning process or/and d) for cooling, or/and
3.) in the aqueous activation composition of an activation zone of a treatment line, wherein the silane content in at least one of these zones lies in the range of 0.001 to 5 g/l, calculated in relation to the respective silane.

4. Use of a silane additive according to at least one of claims 1 to 3 in at least one aqueous composition of a bath or a zone A) for cleaning, rinsing or/and activating prior to a phosphating process or B) for cleaning or/and rinsing prior to passivation or pretreatment with an aqueous conversion composition having a content of fluoride or/and of titanium-, hafnium- or/and zirconium-complex fluoride, of silane, of metal cations such as manganese, of organic polymer/copolymer or/and of at least one additive or C) prior to an alkaline, neutral or acidic aqueous passivation with a content of metal cations, complex fluoride, oxide, phosphate, silane, silicate, organic polymer/copolymer or/and at least one additive.

5. Use of a silane additive according to at least one of claims 1 to 4 in at least one aqueous composition of a bath or a zone prior to an alkali phosphating process, prior to a manganese phosphating process or prior to a zinc phosphating process.

6. Use of a silane additive according to at least one of claims 1 to 5 in an aqueous activation composition A) based on metal phosphate particles of bivalent or/and trivalent metals having an average particle grain size of up to 3 µm and at least one further substance selected from dispersing agents, thickening agents, surfactants and additives such as, for example, biocides.

7. Use of a silane additive according to at least one of claims 1 to 6 in an aqueous activation composition B) based on 0.001 to 10 g/l of in particular colloidal titanium phosphate, 0.005 to 30 g/l of orthophosphate dissolved in water and at least one further substance selected from condensed phosphates, surfactants, stabilizing agents, thickening agents and biocides.

8. Use of a silane additive according to at least one of claims 1 to 7 in an aqueous rinsing liquid having a pH value in the range of 3 to 14.

9. Use of a silane additive according to at least one of claims 1 to 8 in an aqueous cleaning composition having a content of heavy-metal ions such as, for example, iron ions and of complexing agents or in an aqueous cleaning composition or/and in an aqueous rinsing liquid prior to a treatment with an aqueous passivating composition having a content of complexing agents and of metal ions such as, for example, aluminium or/and of heavy-metal ions such as, for example, chromium(III), iron, manganese or/and zinc.

10. Use of a silane additive according to at least one of claims 1 to 9 in an aqueous cleaning composition which has a pH value in the range of 3 to 14, has a total surfactant content in the range of 0.01 to 10 g/l and contains at least one non-ionic surfactant.

11. Use of a silane additive according to at least one of claims 1 to 10, wherein during the production of an aqueous silane-containing composition in each case at least one silane, silanol or/and siloxane with at least one alkoxy group, with at least one amido group, with at least one amino group, with at least one urea group or/and with at least one imino group per molecule is added and is then contained in the aqueous silane-containing composition.

12. Use of a silane additive according to at least one of claims 1 to 11, wherein during the production of an aqueous silane-containing composition in each case at least one silane, silanol or/and siloxane with at least two amino groups, with at least three amino groups, with at least four amino groups, with at least five amino groups or/and with at least six amino groups per molecule or/and with at least two, at least three or more than three alkoxy groups per molecule is added and is then contained in the corresponding aqueous silane-containing composition.

13. Use of a silane additive according to at least one of claims 1 to 12, wherein during the production of an aqueous silane-containing composition in each case at least one alkoxysilane, alkoxysilanol or/and alkoxysiloxane with at least one amido group, with at least one or with at least two amino groups, with at least one urea group or/and with at least one imino group per molecule is added and is then contained in the corresponding aqueous silane-containing composition.

14. Use of a silane additive according to at least one of claims 1 to 13, wherein during the production of an aqueous silane-containing composition in each case at least one alkoxysilane, alkoxysilanol or/and alkoxysiloxane with two, three or more than three amino groups per molecule is added and is then contained in the corresponding aqueous silane-containing composition.

15. Use of a silane additive according to at least one of claims 1 to 14, wherein during the production of an aqueous silane-containing composition in each case at least one silane, silanol or/and siloxane selected from the following silane compounds is added in the range of 0.001 to 5 g/l, calculated in relation to the respective silane, and is then contained in the corresponding aqueous silane-containing composition in the range of 0.001 to 5 g/l, calculated in relation to the respective silane:
3-[2-(2-aminoalkylamino)alkylamino]alkyltrialkoxysilane,
4-amino-dialkylalkyltrialkoxysilane,
4-amino-dialkylalkylalkyldialkoxysilane,
aminoalkylaminoalkyltrialkoxysilane,
aminoalkylaminoalkylalkyldialkoxysilane,
aminoalkyltrialkoxysilane,
bis-(trialkoxysilylalkyl)amine,
bis-(trialkoxysilyl)ethane,
gamma-aminoalkyltrialkoxysilane,
gamma-(trialkoxysilylalkyl)dialkylene triamine,
gamma-ureidoalkyltrialkoxysilane,
N-2-aminoalkyl-3-aminopropyltrialkoxysilane,
N-(3-(trialkoxysilyl)alkyl)alkylene diamine,
N-alkylaminoisoalkyltrialkoxysilane,
N-(aminoalkyl)aminoalkylalkyldialkoxysilane,
N-beta-(aminoalkyl)-gamma-aminoalkyltrialkoxysilane,
N-(gamma-trialkoxysilylalkyl)dialkylene triamine, or/and
poly(aminoalkyl)alkyldialkoxysilane,
wherein the alkyl groups independently of each other represent a methyl, ethyl or/and propyl group.

16. Use of a silane, additive according to at least one of claims 1 to 15, wherein during the production of an aqueous silane-containing composition in each case at least one silane, silanol or/and siloxane selected from silane, compounds based on bis(trialkoxysilylpropyl)amine, based on N-(3-(trialkoxysilyl)propyl)ethylene diamine or/and based on 3-[2-(2-aminoalkylamino)alkylaminol-propyltrialkoxysilane is added and is then contained in the corresponding aqueous silane-containing composition.

## Revendications

1. Utilisation d'un adjuvant de type silane pour éviter l'apparition de points sur des surfaces métalliques comportant du zinc,
1) dans une composition aqueuse de nettoyage,
2) dans un liquide aqueux de rinçage qui est utilisé
a) avant un nettoyage,
b) entre plusieurs zones de nettoyage,
c) immédiatement après un nettoyage,
d) et/ou comme liquide réfrigérant,
3) et/ou dans une composition aqueuse d'activation,
étant entendu que la teneur en respectivement au moins un silane, silanol et/ou siloxane d'au moins l'une de ces compositions aqueuses, calculée par rapport au silane respectif, se situe dans l'intervalle allant de 0,001 à 5 g/L.

2. Utilisation d'un adjuvant de type silane, conforme à la revendication 1,
1) dans un bain aqueux de nettoyage,
2) dans un bain aqueux de rinçage dont le liquide est utilisé
a) avant un nettoyage,
b) entre plusieurs zones de nettoyage,
c) immédiatement après un nettoyage,
d) et/ou aux fins de réfrigération,
3) et/ou dans un bain aqueux d'activation,
étant entendu que la teneur en respectivement au moins un silane, silanol et/ou siloxane d'au moins l'un de ces bains aqueux, calculée par rapport au silane respectif, se situe dans l'intervalle allant de 0,001 à 5 g/L.

3. Utilisation d'un adjuvant de type silane, conforme à la revendication 1 ou 2,
1) dans la composition aqueuse de nettoyage d'une zone de nettoyage,
2) dans le liquide aqueux de rinçage d'une zone de rinçage dont le liquide est utilisé
a) avant un nettoyage,
b) entre plusieurs zones de nettoyage,
c) immédiatement après un nettoyage,
d) et/ou aux fins de réfrigération,
3) et/ou dans la composition aqueuse d'activation d'une zone d'activation d'une ligne de traitement,
étant entendu que la teneur en silane dans au moins l'une de ces zones, calculée par rapport au silane respectif, se situe dans l'intervalle allant de 0,001 à 5 g/L.

4. Utilisation d'un adjuvant de type silane, conforme à l'une au moins des revendications 1 à 3, dans au moins une composition aqueuse d'un bain ou d'une zone
A) pour nettoyage, rinçage et/ou activation avant une phosphatation,
B) ou pour nettoyage et/ou rinçage avant une passivation ou un pré-traitement avec une composition aqueuse de conversion contenant des ions fluorure et/ou des ions complexes titanifluorure, hafni-fluorure et/ou zirconifluorure, un silane, des cations de métaux tels que du manganèse, un polymère/copolymère organique et/ou au moins un adjuvant,
C) ou située avant une passivation en milieu aqueux alcalin, neutre ou acide réalisée avec une composition contenant des cations de métaux, des ions fluorures complexes, un oxyde, un phosphate, un silane, un silicate, un polymère/copolymère organique et/ou au moins un adjuvant.

5. Utilisation d'un adjuvant de type silane, conforme à l'une au moins des revendications 1 à 4, dans au moins une composition aqueuse d'un bain ou d'une zone situé(e) avant une phosphatation alcaline, avant une phosphatation au manganèse ou avant une phosphatation au zinc.

6. Utilisation d'un adjuvant de type silane, conforme à l'une au moins des revendications 1 à 5, dans une composition aqueuse d'activation (A) à base de particules de phosphates de métal ou de métaux divalent(s) et/ou trivalent(s) présentant une taille moyenne de particule valant jusqu'à 3 µm et d'au moins une autre substance choisie parmi les agents dispersants, les agents épaississants, les tensioactifs et les adjuvants tels que par exemple les biocides.

7. Utilisation d'un adjuvant de type silane, conforme à l'une au moins des revendications 1 à 6, dans une composition aqueuse d'activation (B) à base de 0,001 à 10 g/L de phosphate de titane, en particulier colloïdal, de 0,005 à 30 g/L d'orthophosphate dissous dans l'eau et d'au moins une autre substance choisie parmi les phosphates condendensés, les tensioactifs, les agents stabilisants, les agents épaississants et les biocides.

8. Utilisation d'un adjuvant de type silane, conforme à l'une au moins des revendications 1 à 7, dans un liquide aqueux de rinçage dont le pH vaut de 3 à 14.

9. Utilisation d'un adjuvant de type silane, conforme à l'une au moins des revendications 1 à 8, dans une composition aqueuse de nettoyage contenant des ions de métaux lourds, comme par exemple des ions de fer, et un agent complexant, ou dans une composition aqueuse de nettoyage et/ou un liquide aqueux de rinçage utilisé(s) avant un traitement par une composition aqueuse de passivation, contenant un agent complexant et des ions de métal, comme par exemple d'aluminium, et/ou des ions de métaux lourds comme par exemple de chrome-III, de fer, de manganèse et/ou de zinc.

10. Utilisation d'un adjuvant de type silane, conforme à l'une au moins des revendications 1 à 9, dans une composition aqueuse de nettoyage dont le pH vaut de 3 à 14, dont la teneur totale en tensioactifs vaut de 0,01 à 10 g/L et qui contient au moins un tensioactif non-ionique.

11. Utilisation d'un adjuvant de type silane, conforme à l'une au moins des revendications 1 à 10, étant entendu que lors de la préparation d'une composition aqueuse contenant un silane, c'est chaque fois au moins un silane, un silanol et/ou un siloxane comportant au moins un groupe alcoxy, au moins un groupe amido, au moins un groupe amino, au moins un groupe urée et/ou au moins un groupe imino par molécule qui est/sont ajouté(s) et qui est/sont ensuite contenu(s) dans la composition aqueuse contenant un silane.

12. Utilisation d'un adjuvant de type silane, conforme à l'une au moins des revendications 1 à 11, étant entendu que lors de la préparation d'une composition aqueuse contenant un silane, c'est à chaque fois au moins un silane, un silanol et/ou un siloxane comportant au moins deux groupes amino, au moins trois groupes amino, au moins quatre groupes amino, au moins cinq groupes amino et/ou au moins six groupes amino par molécule et/ou au moins deux, au moins trois ou plus de trois groupes alcoxy par molécule qui est/sont ajouté(s) et qui est/sont ensuite contenu(s) dans la composition aqueuse contenant un silane correspondante.

13. Utilisation d'un adjuvant de type silane, conforme à l'une au moins des revendications 1 à 12, étant entendu que lors de la préparation d'une composition aqueuse contenant un silane, c'est à chaque fois au moins un alcoxy-silane, un alcoxy-silanol et/ou un alcoxy-siloxane comportant au moins un groupe amido, au moins un ou au moins deux groupe(s) amino, au moins un groupe urée et/ou au moins un groupe imino par molécule qui est/sont ajouté(s) et qui est/sont ensuite contenu(s) dans la composition aqueuse contenant un silane correspondante.

14. Utilisation d'un adjuvant de type silane, conforme à l'une au moins des revendications 1 à 12, étant entendu que lors de la préparation d'une composition aqueuse contenant un silane, c'est à chaque fois au moins un alcoxy-silane, un alcoxy-silanol et/ou un alcoxy-siloxane comportant deux, trois ou plus de trois groupes amino par molécule qui est/sont ajouté(s) et qui est/sont ensuite contenu(s) dans la composition aqueuse contenant un silane correspondante.

15. Utilisation d'un adjuvant de type silane, conforme à l'une au moins des revendications 1 à 14, étant entendu que lors de la préparation d'une composition aqueuse contenant un silane, c'est à chaque fois au moins un silane, un silanol et/ou un siloxane choisi(s) parmi les composés de type silane de la liste suivante qui est/sont ajouté(s) en une concentration de 0,001 à 5 g/L, calculée par rapport au silane respectif, et qui est/sont ensuite contenu(s) en une concentration de 0,001 à 5 g/L, calculée par rapport au silane respectif, dans la composition aqueuse contenant un silane :
- 3-[2-(2-amino-alkyl)-amino-alkyl]-amino-alkyl-trialcoxy-silane,
- (4-amino-dialkyl-alkyl)-trialcoxy-silane,
- (4-amino-dialkyl-alkyl)-alkyl-dialcoxy-silane,
- (amino-alkyl-amino-alkyl)-trialcoxy-silane,
- (amino-alkyl-amino-alkyl)-alkyl-dialcoxy-silane,
- (amino-alkyl)-trialcoxy-silane,
- bis(trialcoxy-silyl-alkyl)-aminé,
- bis(trialcoxy-silyl)-éthane,
- (γ-amino-alkyl)-trialcoxy-silane,
- [γ-(trialcoxy-silyl)-alkyl]-dialkylènetriamine,
- (γ-uréido-alkyl)-trialcoxy-silane, [N-(2-amino-alkyl)-3-amino-propyl]-trialcoxy-silane,
- N-[3-(trialcoxy-silyl)-alkyl]-alkylènediamine,
- [(N-alkyl-amino)-isoalkyl]-trialcoxy-silane,
- [(N-amino-alkyl)-amino-alkyl]-alkyl-dialcoxy-silane,
- [N-(β-amino-alkyl)-γ-amino-alkyl]-trialcoxy-silane,
- N-[γ-(trialcoxy-silyl)-alkyl]-dialkylènetriamine, et/ou
- poly(amino-alkyl)-alkyl-dialcoxy-silane,
étant entendu que les groupes « alkyl » sont, indépendamment les uns des autres, des groupes méthyle, éthyle et/ou propyle.

16. Utilisation d'un adjuvant de type silane, conforme à l'une au moins des revendications 1 à 15, étant entendu que lors de la préparation d'une composition aqueuse contenant un silane, c'est à chaque fois au moins un silane, un silanol et/ou un siloxane choisi(s) parmi les composés de type silane à base de bis(trialcoxy-silyl-propyl)-amine, à base de N-[3-(trialcoxy-silyl)-propyl]-éthylènediamine et/ou à base de 3-[2-(2-amino-alkyl)-amino-alkyl]-amino-propyl-trialcoxy-silane qui est/sont ajouté(s) et qui est/sont ensuite contenu(s) dans la composition aqueuse contenant un silane correspondante.
